# EUROPEAN PATENT SPECIFICATION

(11) **EP 3 306 210 B1**
(45) Date of publication and mention of the grant of the patent: **23.12.2020**
(21) Application number: 15894290.4
(22) Date of filing: 30.10.2015
(51) Int. Cl.: F24F 7/08, F24F 13/22, F24F 12/00, F24F 13/28

(54) **HEAT EXCHANGE VENTILATION DEVICE**
WÄRMETAUSCH-BELÜFTUNGSVORRICHTUNG
DISPOSITIF DE VENTILATION À ÉCHANGE DE CHALEUR

(30) Priority: 29.05.2015 WO PCT/JP2015/065677; 29.05.2015 WO PCT/JP2015/065678; 29.05.2015 WO PCT/JP2015/065679
(43) Date of publication of application: 11.04.2018
(73) Proprietor: Mitsubishi Electric Corporation, Chiyoda-ku Tokyo 100-8310 (JP)
(72) Inventor: IWATA, Koji, Tokyo 100-8310 (JP); AOKI, Hiroki, Tokyo 100-8310 (JP); MIYAZAKI, Yuki, Tokyo 100-8310 (JP); KATO, Shinya, Tokyo 102-0073 (JP); FUJII, Yoshinori, Tokyo 102-0073 (JP)
(74) Representative: Mewburn Ellis LLP
(86) International application number: PCT/JP2015/080854
(87) International publication number: WO 2016/194258

(56) References cited:
- EP-A1- 2 400 232
- WO-A1-2010/095237
- WO-A1-2010/125632
- DE-A1- 10 315 280
- FR-A1- 2 864 607
- GB-A- 1 009 925
- JP-A- H09 113 028
- JP-A- 2001 280 656
- JP-A- 2011 069 613
- US-A- 5 795 361
- US-A1- 2003 150 196
- US-A1- 2006 053 759
- US-A1- 2006 053 759

## Description

### Field

The present invention relates to a heat-exchange type ventilation apparatus that provides ventilation while allowing heat exchange between a supply airflow and a discharge airflow.

### Background

It is conventional to use a heat-exchange type ventilation apparatus that includes a main body having a supply air path and a discharge air path formed therein and a heat exchanger placed inside the main body and that provides ventilation while allowing heat exchange between air passing through the supply air path and air passing through the discharge air path. The heat-exchange type ventilation apparatus as described above has been disclosed in Patent Literature 1, in which a filter for removing dust and insects in a supply airflow and a filter holding unit are provided. The filter holding unit is configured by including a receiving pan, a filter holding frame, a first filter frame, and a second filter frame. The first filter frame with a filter accommodated therein is supported by the filter holding frame. The second filter frame retains the filter accommodated in the first filter frame and fixes the filter to the first filter frame.

### Citation List

### Patent Literature

Patent Literature 1: Japanese Patent No. 5079135 EP 2 400 232 A1 proposes a heat exchanger ventilation apparatus including a box-shaped body casing in which an exhaust air passage that exhausts indoor air to an outside of a room and a supply air passage that supplies outdoor air to an inside of a room are formed, a heat exchanger that is arranged at an intersection portion at which the exhaust air passage and the supply air passage intersect and performs heat exchange between an exhaust air flow flowing in the exhaust air passage and a supply air flow flowing in the supply air passage, and a filter holding unit in which a holding frame that holds a filter on an inflow side of the supply air flow of the heat exchanger and a pan that receives a falling object from the filter are integrated and is attachable and detachable to and from the body casing together with the filter, and improves a maintenance performance and a service performance.

### Summary

### Technical Problem

However, in the conventional heat-exchange type ventilation apparatus described above, two types of filter frames with different shapes are needed in order to hold the filter. Thus, when the filter is initially attached to the heat-exchange type ventilation apparatus, it is necessary to perform a work to assemble two types of filter frames with different shapes. Further, when maintenance of the filter, such as replacement of the filter, is performed, it is necessary to perform a work to disassemble the two types of filter frames having different shapes and a work to assemble the two types of filter frames having different shapes. Accordingly, the above heat-exchange type ventilation apparatus has a problem of burdensome maintenance work.

The present invention has been achieved in view of the above, and an object of the present invention is to provide a heat-exchange type ventilation apparatus that can improve the maintainability of a filter.

### Solution to Problem

In order to solve the above problems and achieve the object, a heat-exchange type ventilation apparatus as set out in claim 1 is provided.

### Advantageous Effects of Invention

The heat-exchange type ventilation apparatus according to the present invention produces an effect of obtaining a heat-exchange type ventilation apparatus that can improve the maintainability of a filter.

### Brief Description of Drawings

FIG. 1 is an exploded perspective view of a heat-exchange type ventilation apparatus according to a first embodiment of the present invention as viewed from the top surface side.
FIG. 2 is an exploded perspective view of the heat-exchange type ventilation apparatus according to the first embodiment as viewed from the bottom surface side.
FIG. 3 is a plan view of the heat-exchange type ventilation apparatus according to the first embodiment.
FIG. 4 is a cross-sectional view of the heat-exchange type ventilation apparatus according to the first embodiment as viewed from the side thereof.
FIG. 5 is a perspective view of a heat exchanger according to the first embodiment.
FIG. 6 is an exploded perspective view of the heat exchanger according to the first embodiment.
FIG. 7 is a partially enlarged cross-sectional view of a corner portion of the heat exchanger according to the first embodiment.
FIG. 8 is a partially enlarged cross-sectional view of a corner portion of the heat exchanger accommodated in a housing in the heat-exchange type ventilation apparatus according to the first embodiment.
FIG. 9 is a cross-sectional view illustrating a corner portion of a supply air filter accommodated in the housing in the heat-exchange type ventilation apparatus according to the first embodiment.
FIG. 10 is a cross-sectional view illustrating a corner portion of a discharge air filter accommodated in the housing in the heat-exchange type ventilation apparatus according to the first embodiment.
FIG. 11 is a perspective view of a supply air filter frame included in the supply air filter and a discharge air filter frame included in the discharge air filter in the first embodiment.
FIG. 12 is a partially enlarged perspective view of the supply air filter frame in the first embodiment.
FIG. 13 is an exploded perspective view of an air supplying fan and an air discharging fan in the heat-exchange type ventilation apparatus according to the first embodiment.
FIG. 14 is a partially enlarged cross-sectional view of a portion D illustrated in FIG. 4.
FIG. 15 is a partially enlarged perspective view of the portion D illustrated in FIG. 4.
FIG. 16 is a perspective view of the supply air filter frame in the first embodiment as viewed from the supply-airflow outflow side.
FIG. 17 is a perspective view of the supply air filter frame in the first embodiment with a supply-air filter grip removed as viewed from the supply-airflow outflow side.
FIG. 18 is a perspective view of the discharge air filter frame in the first embodiment as viewed from the discharge-airflow outflow side.
FIG. 19 is a perspective view of the discharge air filter frame in the first embodiment with a discharge-air filter grip removed as viewed from the discharge-airflow outflow side.
FIG. 20 is a plan view of a filter frame in the first embodiment as viewed from the top surface side.
FIG. 21 is a plan view of the filter frame in the first embodiment as viewed from the bottom surface side.
FIG. 22 is a side view of the filter frame in the first embodiment as viewed from the side of the side surface that extends in the longitudinal direction.
FIG. 23 is a plan view of the filter frame in the first embodiment with filter main bodies accommodated therein as viewed from the top surface side.
FIG. 24 is a plan view of the filter frame in the first embodiment with the filter main bodies accommodated therein as viewed from the bottom surface side.
FIG. 25 is a diagram illustrating an example of the dimensions of the filter frame in the first embodiment.

### Description of Embodiments

A heat-exchange type ventilation apparatus according to a first of the present invention will now be described in detail with reference to the drawings. The present invention is not limited to the first embodiment.

### First embodiment.

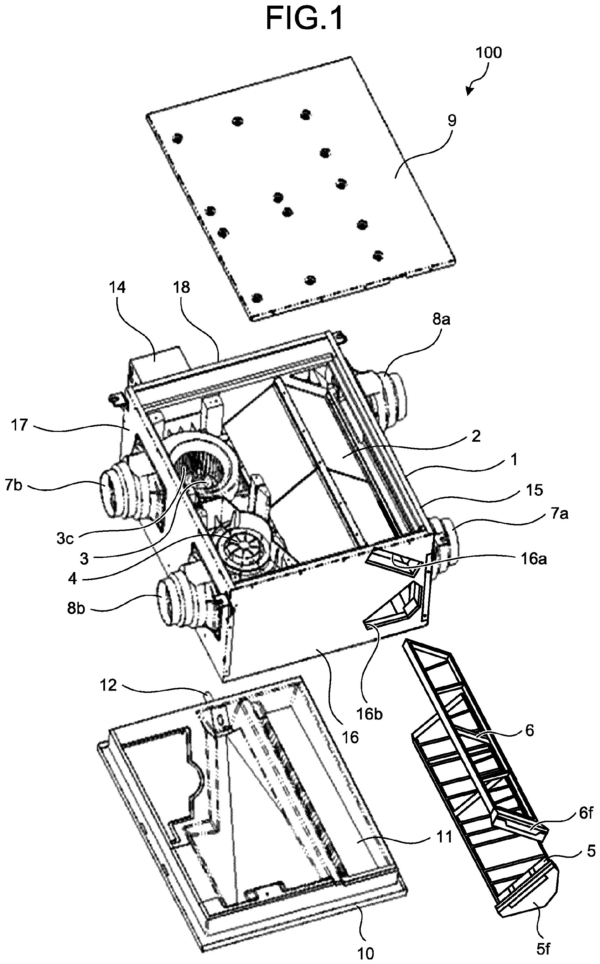

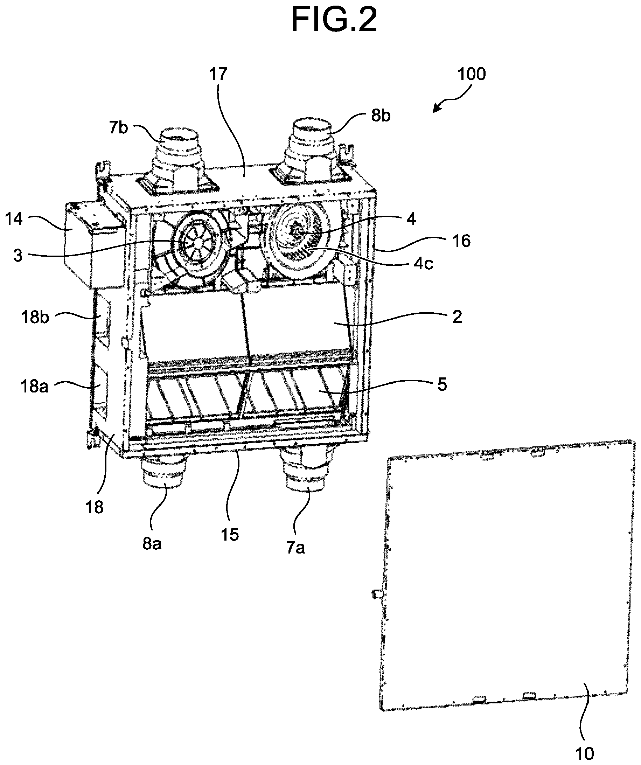

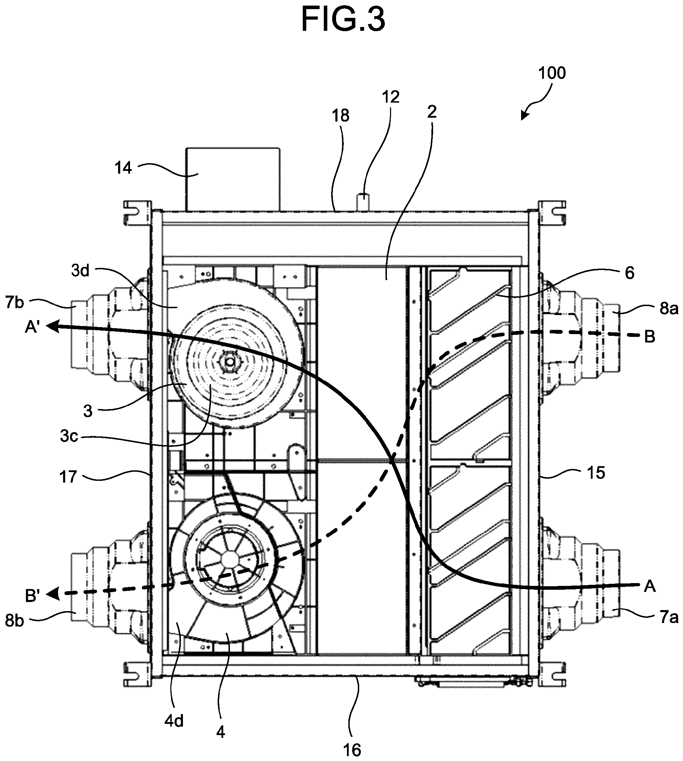

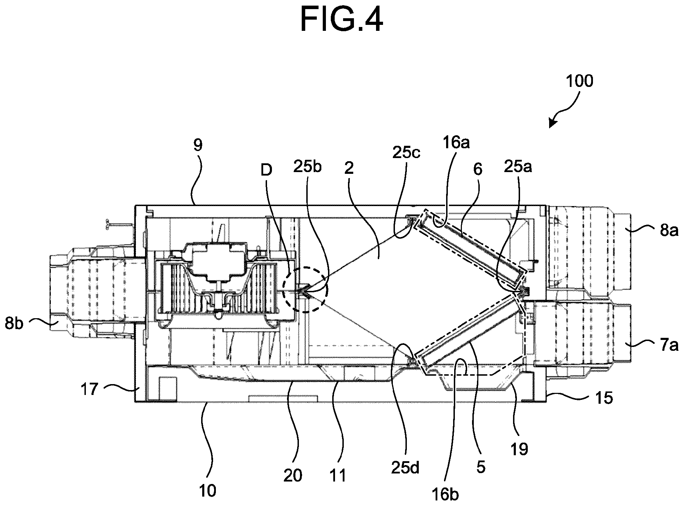

FIG. 1 is an exploded perspective view of a heat-exchange type ventilation apparatus according to a first embodiment of the present invention as viewed from the top surface side. FIG. 2 is an exploded perspective view of the heat-exchange type ventilation apparatus according to the first embodiment as viewed from the bottom surface side. FIG. 3 is a plan view of the heat-exchange type ventilation apparatus according to the first embodiment. FIG. 4 is a cross-sectional view of the heat-exchange type ventilation apparatus according to the first embodiment as viewed from the side thereof.

A heat-exchange type ventilation apparatus 100 according to the first embodiment includes a housing 1, which is a main body; a heat exchanger 2, an air supplying fan 3; an air discharging fan 4; a supply air filter 5; and a discharge air filter 6. The housing 1 includes an exterior-side inlet portion 7a; an interior-side inlet portion 8a; an interior-side outlet portion 7b; and an exterior-side outlet portion 8b formed therein. A supply air path that connects the exterior-side inlet portion 7a and the interior-side outlet portion 7b is formed in the housing 1. A discharge air path that connects the interior-side inlet portion 8a and the exterior-side outlet portion 8b is also formed in the housing 1.

The air supplying fan 3 is placed in the supply air path. The air supplying fan 3 generates a supply airflow that causes supply air that is outside air admitted through the exterior-side inlet portion 7a into the supply air path to flow out through the interior-side outlet portion 7b.

The air discharging fan 4 is placed in the discharge air path. The air discharging fan 4 generates a discharge airflow that causes discharge air that is inside air admitted through the interior-side inlet portion 8a into the discharge air path to flow out through the exterior-side outlet portion 8b.

The heat exchanger 2 is placed at the intersection portion of the supply air path and the discharge air path in the housing 1 and allows heat exchange between the supply airflow and the discharge airflow. The heat-exchange type ventilation apparatus 100 is a ventilation apparatus that provides ventilation while allowing heat exchange between the supply airflow and the discharge airflow.

The housing 1 includes six surfaces, i.e., a top plate 9, a bottom plate 10 opposite the top plate 9, and four side plates 15 to 18 closing the spaces between the top plate 9 and the bottom plate 10. The side plate 15 includes the exterior-side inlet portion 7a and the interior-side inlet portion 8a placed therein. The side plate 17, which is opposite the side plate 15, includes the interior-side outlet portion 7b and the exterior-side outlet portion 8b placed therein. In this case, as illustrated in FIG. 3, the path passing from the exterior-side inlet portion 7a through the heat exchanger 2 to the air supplying fan 3 is the supply air path A-A', and the path passing from the interior-side inlet portion 8a through the heat exchanger 2 to the air discharging fan 4 is the discharge air path B-B'. The air supplying fan 3 and the air discharging fan 4 are disposed downstream of the heat exchanger 2 in their respective paths.

A control circuit 14 is attached to the side plate 18. As illustrated in FIG. 2, the side plate 18 has an opening 18a and an opening 18b, which can be used as ports to admit air into the discharge air path B-B', in addition to the interior-side inlet portion 8a. The opening 18a is connected upstream of the heat exchanger 2 and thus the air admitted from the opening 18a is discharged through the heat exchanger 2. The opening 18b is connected downstream of the heat exchanger 2 and thus the air admitted from the opening 18b is discharged without going through the heat exchanger 2. Consequently, when a duct in communication with the room is connected to the opening 18b, inside air is discharged without going through the heat exchanger 2 and thus heat exchange is not performed. It is possible to reduce the pressure loss needed for the air to pass through the heat exchanger 2 although heat exchange is not performed between inside air and outside air. In this manner, the load on the air discharging fan 4 can be reduced and thereby the power consumption can be reduced. As illustrated in FIG. 1, the side plate 16, which is opposite the side plate 18, has openings 16a and 16b, which are insertion apertures. The supply air filter 5 and the discharge air filter 6 can be inserted into the housing 1 through the openings 16a and 16b. Because maintenance can be performed on both of the supply air filter 5 and the discharge air filter 6 from one side of the side plate 16, ease of cleaning can be improved.

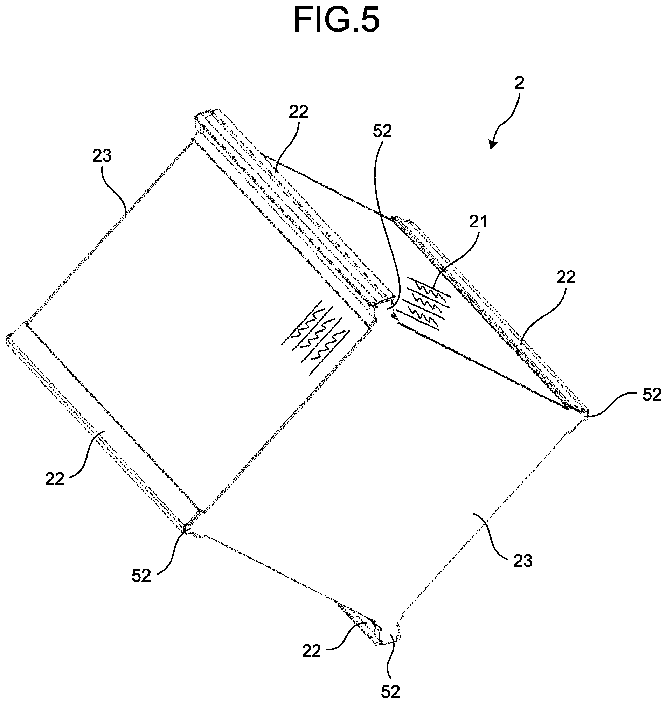

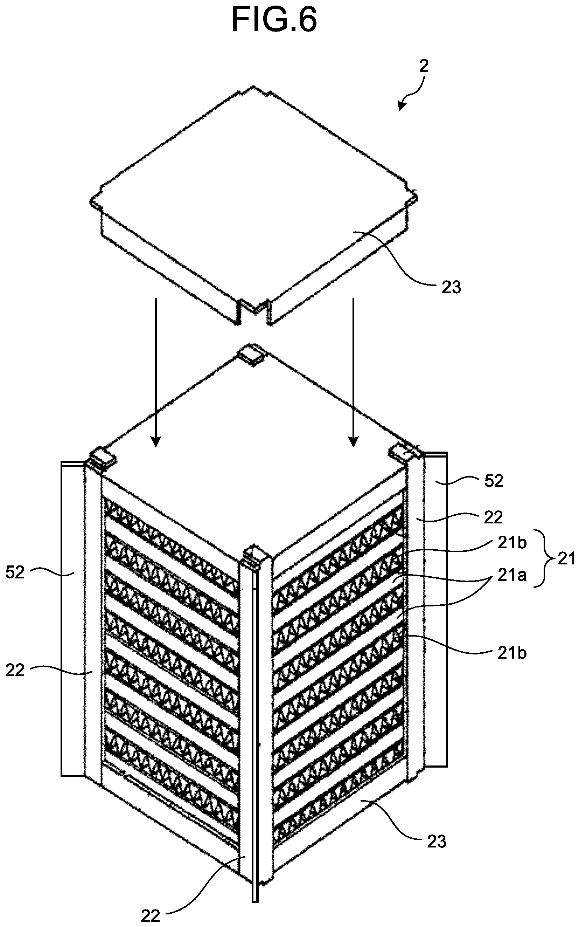

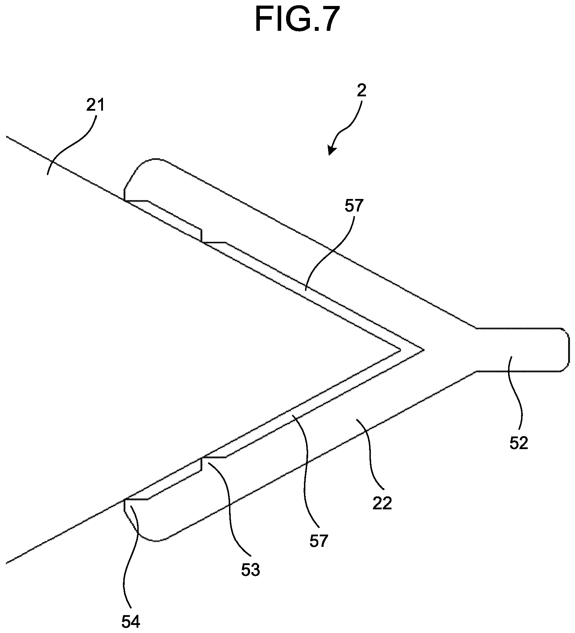

FIG. 5 is a perspective view of the heat exchanger 2 according to the first embodiment. FIG. 6 is an exploded perspective view of the heat exchanger 2 according to the first embodiment. FIG. 7 is a partially enlarged cross-sectional view of a corner portion of the heat exchanger 2 according to the first embodiment.

The heat exchanger 2 includes a heat exchange element 21, frame members 22, and end face members 23. The heat exchange element 21 is formed, for example, by alternately stacking partition members 21a, each of which is made from paper and has a sheet-like and polygonal shape, and spacing members 21b, each of which is made from paper and has a wave-like shape. In the first embodiment, the partition members 21a and the spacing members 21b have a square shape as viewed from the stacking direction of the partition members 21a. The heat exchange element 21 formed by stacking the partition members 21a and the spacing members 21b has a cuboid shape. The stacking direction of the partition members 21a is simply referred to as the stacking direction in the description hereinafter.

Spaces between the partition members 21a, which are spaced by the spacing members 21b, provide flow paths through which air can pass. By causing the supply airflow to pass through a flow path on one side of each of the partition members 21a and causing the discharge airflow to pass through a flow path on the other side thereof, the heat exchange element 21 can perform total heat exchange, sensible heat exchange, or latent heat exchange between the supply airflow and the discharge airflow via each of the partition members 21a. Use of paper for the partition members 21a and the spacing members 21b enables a reduction in material cost. Additionally, condensate generated when the heat exchange is performed is retained in the partition members 21a and the spacing members 21b, which are made from paper; therefore, blockage of the flow paths due to formation of ice can be reduced. The edges of the heat exchange element 21 that extend in the stacking direction are each covered by the frame member 22.

The frame members 22 cover the edges of the heat exchange element 21 that extend in the stacking direction. As illustrated in FIGS. 5 and 7, each of the frame members 22 has an L-like shape in a section and faces two of the side surfaces of the heat exchange element 21 that extend from the ridge portions of the heat exchange element 21 that extend in the stacking direction. The surface of each frame member 22 opposite the surface thereof that faces the heat exchange element 21 has an outer protrusion 52 formed thereon that extends in the stacking direction.

The surface of each frame member 22 that faces the heat exchange element 21 has inner protrusions 53 and 54 formed thereon that extend in the stacking direction. The inner protrusion 53 and the inner protrusion 54 are formed on the surface of each frame member 22 that faces one of the surfaces of the heat exchange element 21 and they are spaced apart from each other in a direction perpendicular to the stacking direction. Because each frame member 22 faces two of the surfaces of the heat exchange element 21, two each of the inner protrusions 53 and the inner protrusions 54 are formed on each frame member 22. The inner protrusions 53 and 54 abut on the side surfaces of the heat exchange element 21 or dig into the side surfaces of the heat exchange element 21.

As illustrated in FIG. 6, the end face members 23 cover the end surfaces of the heat exchange element 21 in the stacking direction. The end face members 23 are elastic bodies having airtightness to prevent air from leaking from the heat exchange element 21 to the end surface sides. Each of the end face members 23 is an airtight gasket having a thickness and thus air is prevented from leaking with ease even when the heat exchanger 2 has contracted.

With reference back to FIGS. 1 to 4, the bottom plate 10 includes a drain pan 11 on the inner surface side, and the drain pan 11 includes a drain port 12. The drain pan 11 includes a supply-air-side drain pan 19 to retain water resulting from condensation, due to the heat exchanger 2 or the like, of moisture contained in the air admitted through the exterior-side inlet portion 7a. The drain pan 11 also includes a discharge-air-side drain pan 20 to retain water such as condensate generated when the heat exchanger 2 performs heat exchange between air admitted through the interior-side inlet portion 8a and air admitted through the exterior-side inlet portion 7a. The discharge-air-side drain pan 20 is in communication with the drain port 12; therefore, drain water can be discharged. If the amount of water retained in the supply-air-side drain pan 19 is large, a water path may be included to achieve passage to the discharge-air-side drain pan 20.

The heat exchanger 2 is inserted into the housing 1 through an opening generated by removing the drain pan 11. The heat exchanger 2 is placed in the housing 1 such that one edge of the heat exchanger 2 that extends in the stacking direction and the diagonally opposite edge of the heat exchanger 2 are lined up vertically. By placing the heat exchanger 2 in such a manner, the area of heat exchange of the heat exchanger 2 can be used effectively and thereby an enhancement in thermal exchange efficiency can be achieved.

The housing 1 has support recess portions 25a to 25d formed therein to support the heat exchanger 2. The support recess portions 25a to 25d are grooves that extend in the stacking direction of the partition members 21a as placed in the housing 1.

The air supplying fan 3 and the air discharging fan 4 are placed on one side of the heat exchanger 2 in the housing 1. The positions of the air supplying fan 3 and the air discharging fan 4 are downstream of the heat exchanger 2 in the supply air path and the discharge air path, respectively. The air supplying fan 3 and the air discharging fan 4 are placed in the housing 1 next to each other in the stacking direction of the partition members 21a such that their inlet ports 3c and 4c are oriented in opposite directions to each other and their outlet ports 3d and 4d are oriented in the same direction. This placement can reduce the housing 1 in size in the height direction.

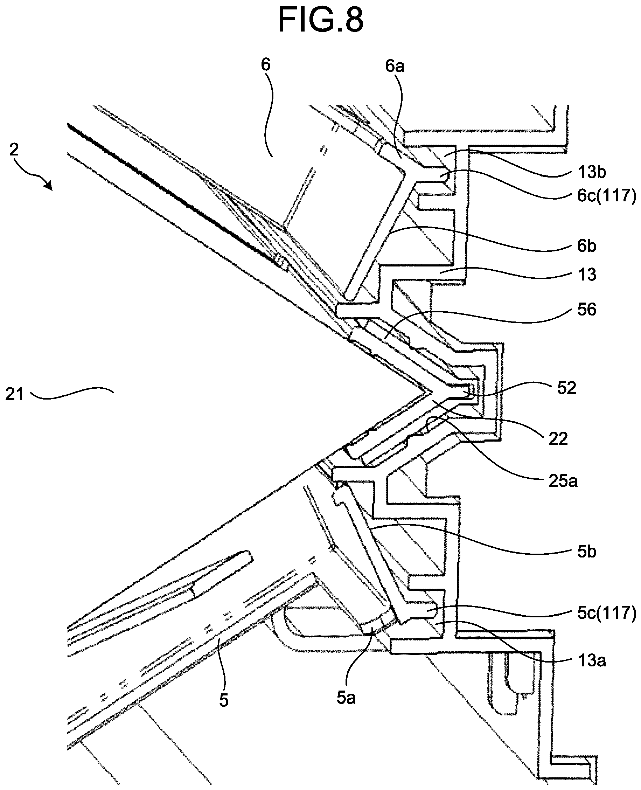

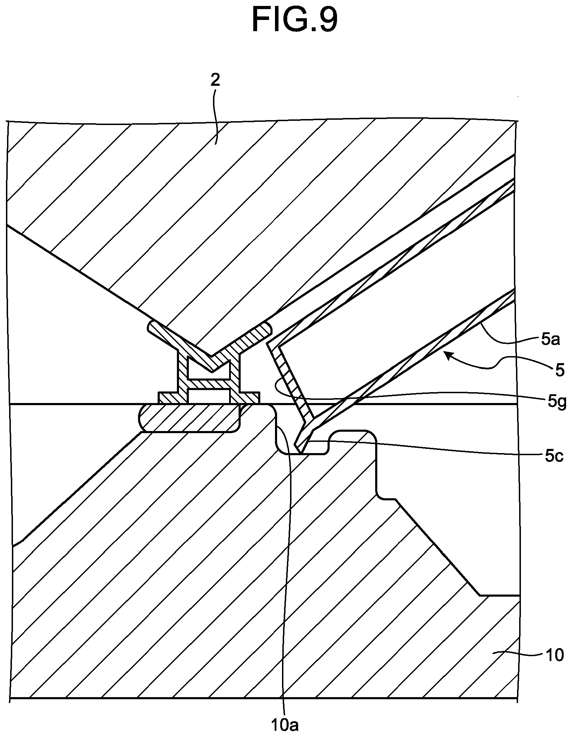

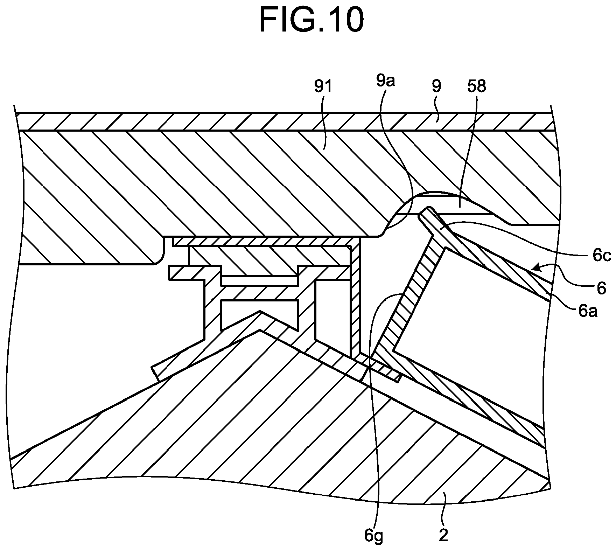

FIG. 8 is a partially enlarged cross-sectional view of a corner portion of the heat exchanger 2 accommodated in the housing 1 in the heat-exchange type ventilation apparatus 100 according to the first embodiment. In FIG. 8, the corner portion of the heat exchanger 2 on the side of the supply air filter 5 and the discharge air filter 6 in the housing 1 is enlarged. FIG. 9 is a cross-sectional view illustrating a corner portion of the supply air filter 5 accommodated in the housing 1 in the heat-exchange type ventilation apparatus 100 according to the first embodiment. In FIG. 9, the corner portion of the supply air filter 5 on the side of the bottom plate 10 in the housing 1 is enlarged. FIG. 10 is a cross-sectional view illustrating a corner portion of the discharge air filter 6 accommodated in the housing 1 in the heat-exchange type ventilation apparatus 100 according to the first embodiment. In FIG. 10, the corner portion of the discharge air filter 6 on the side of the top plate 9 in the housing 1 is enlarged.

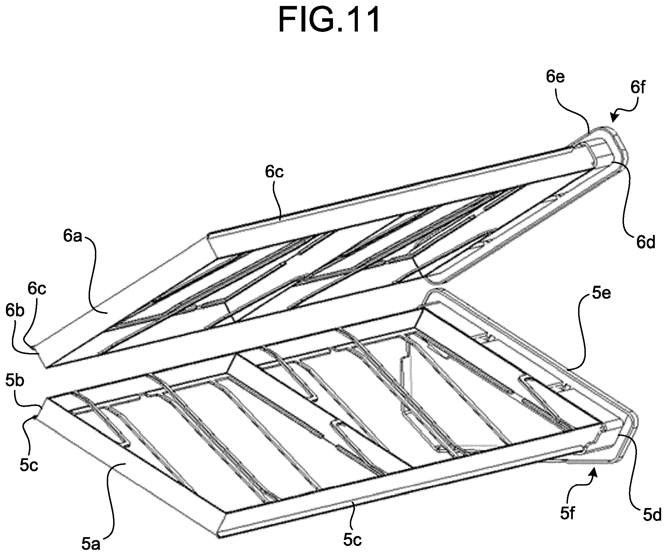

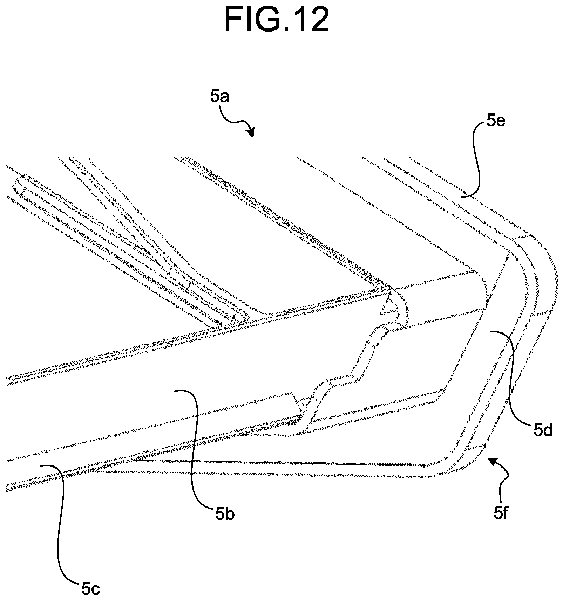

FIG. 11 is a perspective view of a supply air filter frame 5a included in the supply air filter 5 and a discharge air filter frame 6a included in the discharge air filter 6 according to the first embodiment. FIG. 12 is a partially enlarged perspective view of the supply air filter frame 5a according to the first embodiment. The supply air filter 5 and the discharge air filter 6 include the supply air filter frame 5a and the discharge air filter frame 6a, which function as filter cases that retain the filter main bodies formed from a nonwoven fabric or the like.

The supply air filter 5 is, as illustrated in FIG. 1, inserted into the housing 1 through the opening 16b, which is formed in the housing 1, to abut on the surface of the heat exchanger 2 that is located on the upstream side in the supply air path as illustrated in FIG. 4. The discharge air filter 6 is, as illustrated in FIG. 1, inserted into the housing 1 through the opening 16a, which is formed in the housing 1, to abut on the surface of the heat exchanger 2 that is located on the upstream side in the discharge air path as illustrated in FIG. 4.

As illustrated in FIG. 8, a rib frame body 13 that supports the supply air filter 5 and the discharge air filter 6 is formed in the housing 1. A facing surface 5b of the supply air filter frame 5a that faces the rib frame body 13 has a frame protrusion 5c that is a protrusion extending in the stacking direction formed thereon. A facing surface 6b of the discharge air filter frame 6a that faces the rib frame body 13 has a frame protrusion 6c that is a protrusion extending in the stacking direction formed thereon.

Of the support recess portions 25a to 25d that support the heat exchanger 2, the support recess portion 25a is formed in the rib frame body 13. The outer protrusion 52 formed on one of the frame members 22 of the heat exchanger 2 is fitted in the support recess portion 25a. The heat exchanger 2 is positioned in the housing 1 when the outer protrusion 52 is fitted in the support recess portion 25a. As illustrated in FIG. 8, a seal material 56 may be interposed between the support recess portion 25a and the outer protrusion 52.

The rib frame body 13 has filter-frame guide recess portions 13a and 13b that extend in the stacking direction formed therein such that the support recess portion 25a is located between the filter-frame guide recess portions 13a and 13b. As illustrated in FIG. 8, the frame protrusion 5c, which is formed on the supply air filter frame 5a, and the frame protrusion 6c, which is formed on the discharge air filter frame 6a, are fitted in the filter-frame guide recess portions 13a and 13b, respectively. By fitting the frame protrusions 5c and 6c in the filter-frame guide recess portions 13a and 13b and sliding the supply air filter 5 and the discharge air filter 6, insertion and removal of the supply air filter 5 and the discharge air filter 6 in the stacking direction are guided. In this way, the supply air filter 5 and the discharge air filter 6 can be inserted and removed stably. Additionally, the supply air filter 5 and the discharge air filter 6 are positioned in the housing 1 and are supported when the frame protrusions 5c and 6c are fitted in the filter-frame guide recess portions 13a and 13b.

As illustrated in FIG. 9, a filter-frame guide recess portion 10a that extends in the stacking direction is formed on the inner side of the bottom plate 10. A facing surface 5g of the supply air filter frame 5a, which faces the bottom plate 10, is also formed with the frame protrusion 5c that is a protrusion extending in the stacking direction. As illustrated in FIG. 10, a heat insulating material 91 on the inner side of the top plate 9 is formed with a filter-frame guide recess portion 9a that extends in the stacking direction. A seal material 58 is placed inside the filter-frame guide recess portion 9a. A facing surface 6g of the discharge air filter frame 6a, which faces the top plate 9, is also formed with the frame protrusion 6c that is a protrusion extending in the stacking direction.

As illustrated in FIGS. 9 and 10, the frame protrusion 5c formed on the supply air filter frame 5a is fitted in the filter-frame guide recess portion 10a, and the frame protrusion 6c formed on the discharge air filter frame 6a is fitted in the filter-frame guide recess portion 9a. By fitting the frame protrusions 5c and 6c respectively in the filter-frame guide recess portions 10a and 9a and sliding the supply air filter 5 and the discharge air filter 6, insertion and removal of the supply air filter 5 and the discharge air filter 6 in the stacking direction are guided. In this way, the supply air filter 5 and the discharge air filter 6 can be inserted and removed stably. Additionally, the supply air filter 5 and the discharge air filter 6 are positioned in the housing 1 when the frame protrusions 5c and 6c are fitted in the filter-frame guide recess portions 10a and 9a.

As illustrated in FIGS. 11 and 12, the supply air filter frame 5a and the discharge air filter frame 6a respectively include a supply-air-filter sealing surface portion 5d and a discharge-air-filter sealing surface portion 6d to provide sealing between the supply air filter frame 5a and the discharge air filter frame 6a and the side plate 16 of the housing 1. As illustrated in FIGS. 11 and 12, in order to further improve the airtightness, the supply-air-filter sealing surface portion 5d has a rib-like protrusion 5e and the discharge-air-filter sealing surface portion 6d has a protrusion 6e. As illustrated in FIG. 1, a supply-air filter grip 5f and a discharge-air filter grip 6f that are detachable and serve as parts to be held when the filters 5 and 6 are inserted and removed are included in the supply air filter frame 5a and the discharge air filter frame 6a, respectively.

The supply-air filter grip 5f is a sealing portion that seals the opening 16b formed in the side plate 16 from the outer side of the housing 1 and that is detachably disposed on the supply air filter frame 5a. The discharge-air filter grip 6f is a sealing portion that seals the opening 16a formed in the side plate 16 from the outer side of the housing 1 and that is detachably disposed on the discharge air filter frame 6a. The supply-air filter grip 5f includes the supply-air-filter sealing surface portion 5d and the protrusion 5e. The discharge-air filter grip 6f includes the discharge-air-filter sealing surface portion 6d and the protrusion 6e.

The opening 16b formed in the side plate 16 has an opening portion that is wider than the cross section of the supply air filter frame 5a taken parallel to its shorter side-surface portion and is also larger than the opening 16a so that insects and dust collected in the housing 1 can be cleaned from the housing 1. As illustrated in FIG. 1, the supply-air-filter sealing surface portion 5d has such a trapezoidal shape so as to fit the shape of the opening 16b. Meanwhile, the opening 16a formed in the side plate 16 has a rectangular shape. As illustrated in FIG. 1, the discharge-air-filter sealing surface portion 6d has such a rectangular shape as to fit the shape of the opening 16a. Thus, the supply-air filter grip 5f and the discharge-air filter grip 6f have different shapes from each other. The supply air filter frame 5a and the discharge air filter frame 6a are described later in detail.

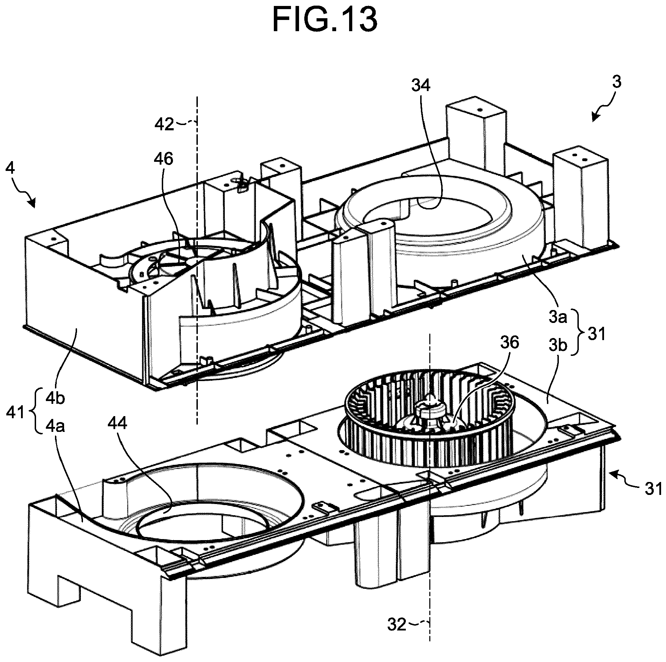

Of the support recess portions 25a to 25d, the support recess portion 25b, which is placed on the side of the air supplying fan 3 and the air discharging fan 4, is formed at the air supplying fan 3 and the air discharging fan 4. FIG. 13 is an exploded perspective view of the air supplying fan 3 and the air discharging fan 4 in the heat-exchange type ventilation apparatus 100 according to the first embodiment.

A casing 31 of the air supplying fan 3 includes an inlet-side casing 3a, which is a first casing, and a motor casing 3b, which is a second casing, and the inlet-side casing 3a and the motor casing 3b can be split from each other in a direction along a rotation axis 32 of a motor 36 at a splitting plane that is orthogonal to the rotation axis 32. The casing 31 is configured by combining the inlet-side casing 3a and the motor casing 3b. The inlet-side casing 3a includes an inlet portion 34 formed therein.

A casing 41 of the air discharging fan 4 includes an inlet-side casing 4a, which is a first casing, and a motor casing 4b, which is a second casing, and the inlet-side casing 4a and the motor casing 4b can be split from each other in a direction along a rotation axis 42 of a motor 46 at a splitting plane that is orthogonal to the rotation axis 42. The casing 41 is configured by combining the inlet-side casing 4a and the motor casing 4b. The inlet-side casing 4a includes an inlet portion 44 formed therein.

The inlet-side casing 3a of the air supplying fan 3 and the inlet-side casing 4a of the air discharging fan 4 are components having an identical shape. The motor casing 3b of the air supplying fan 3 and the motor casing 4b of the air discharging fan 4 are components having an identical shape. That is, the casing 31 of the air supplying fan 3 and the casing 41 of the air discharging fan 4 are components having an identical shape. In this manner, the number of components can be reduced and manufacturing costs can be suppressed.

The air supplying fan 3 and the air discharging fan 4 are placed next to each other such that the rotation axis 32 and the rotation axis 42 are parallel with each other and the inlet portions 34 and 44 face in opposite directions.

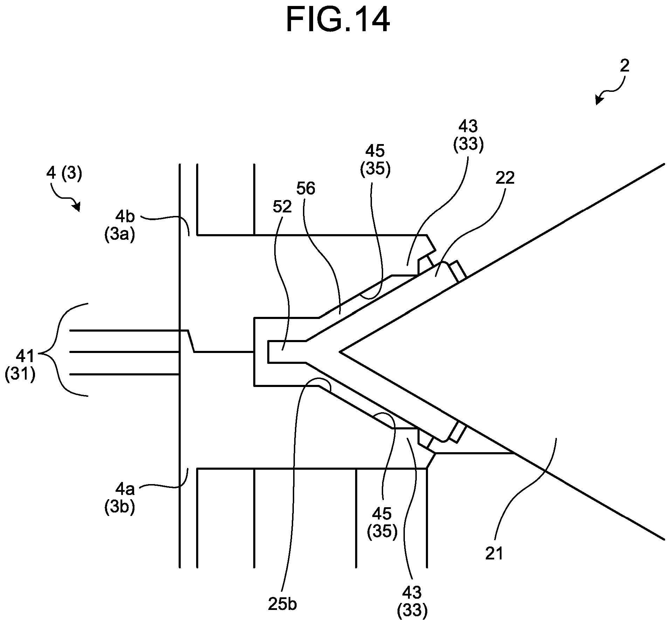

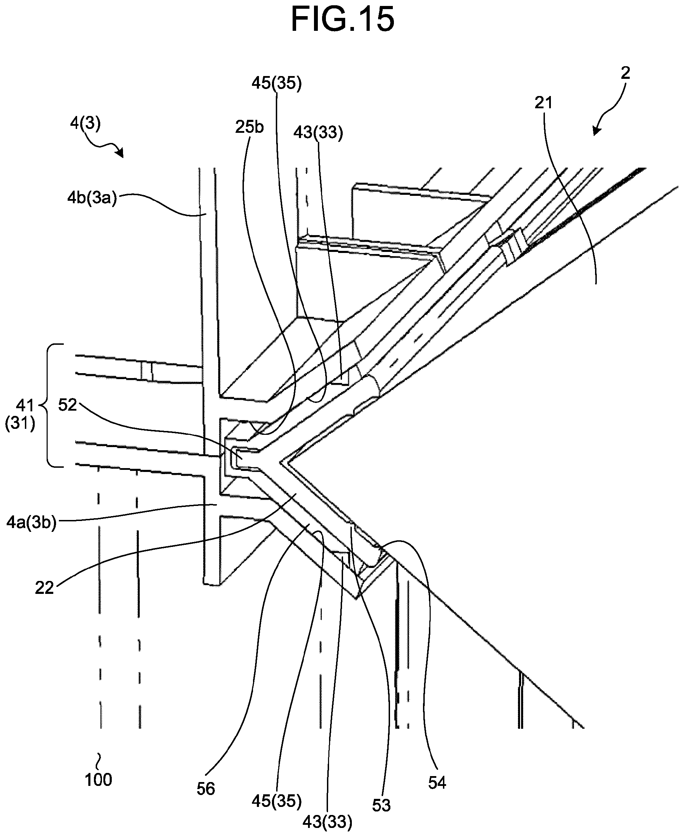

FIG. 14 is a partially enlarged cross-sectional view of a portion D illustrated in FIG. 4. FIG. 15 is a partially enlarged perspective view of the portion D illustrated in FIG. 4. The splitting plane between the inlet-side casing 4a and the motor casing 4b of the casing 41 of the air discharging fan 4 abuts on one of the edge portions of the heat exchanger 2 that extend in the stacking direction. The support recess portion 25b is formed at the splitting plane between the inlet-side casing 4a and the motor casing 4b. This means that the casing 41 of the air discharging fan 4 can be split into the inlet-side casing 4a and the motor casing 4b at its portion of the support recess portion 25b. The inlet-side casing 4a and the motor casing 4b have inclined surfaces 45 that face each other at the splitting plane. The support recess portion 25b is formed by the inclined surfaces 45, which face each other, by combining the inlet-side casing 4a and the motor casing 4b. The support recess portion 25b, which is formed by the inclined surfaces 45, is a V-shaped groove forming an angle less than 180°. The inclined surfaces 45, which form inner wall surfaces of the support recess portion 25b, have protrusions 43 extending in the stacking direction.

As is the case with the casing 41 of the air discharging fan 4, the splitting plane between the inlet-side casing 3a and the motor casing 3b of the casing 31 of the air supplying fan 3 abuts on one of the edge portions that extend in the stacking direction of the heat exchanger 2. The support recess portion 25b is formed at the splitting plane between the inlet-side casing 3a and the motor casing 3b. The inlet-side casing 3a and the motor casing 3b have inclined surfaces 35 that face each other at the splitting plane. The support recess portion 25b is formed by the inclined surfaces 35, which face each other, by combining the inlet-side casing 3a and the motor casing 3b. The support recess portion 25b, which is formed by the inclined surfaces 35, is a V-shaped groove forming an angle less than 180°. The inclined surfaces 35, which form inner wall surfaces of the support recess portion 25b, have protrusions 33 extending in the stacking direction.

One of the frame members 22 and the corresponding one of the outer protrusions 52 of the heat exchanger 2 are fitted in the support recess portion 25b. The seal material 56 is interposed between the support recess portion 25b and the frame member 22. If a partition wall is placed between the air supplying fan 3 and the air discharging fan 4, and the heat exchanger 2, the support recess portion 25b may be formed in the partition wall.

The support recess portion 25c is formed on the top plate 9 side of the heat exchanger 2 in the housing 1, for example, in the top plate 9, although detailed illustration is omitted. The support recess portion 25d is formed on the bottom plate 10 side of the heat exchanger 2 in the housing 1, for example, in the drain pan 11. As in the case with the support recess portions 25a and 25b, the outer protrusions 52 of the frame members 22 are fitted in the support recess portions 25c and 25d. Additionally, the seal material 56 may be interposed between the support recess portion 25c and the corresponding one of the outer protrusions 52 and between the support recess portion 25d and the corresponding one of the outer protrusions 52. The inner wall surfaces of the support recess portions 25c and 25d may have protrusions extending in the stacking direction.

Next, a filter frame to be preferably used as the supply air filter frame 5a and the discharge air filter frame 6a in the first embodiment is described. In the following descriptions, members same as those described above are denoted by like reference signs.

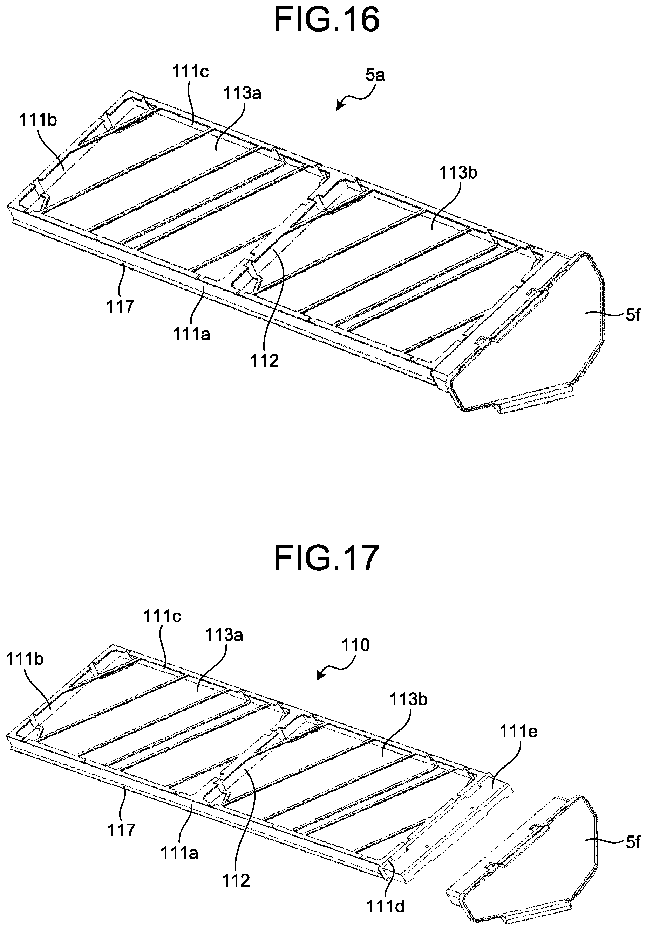

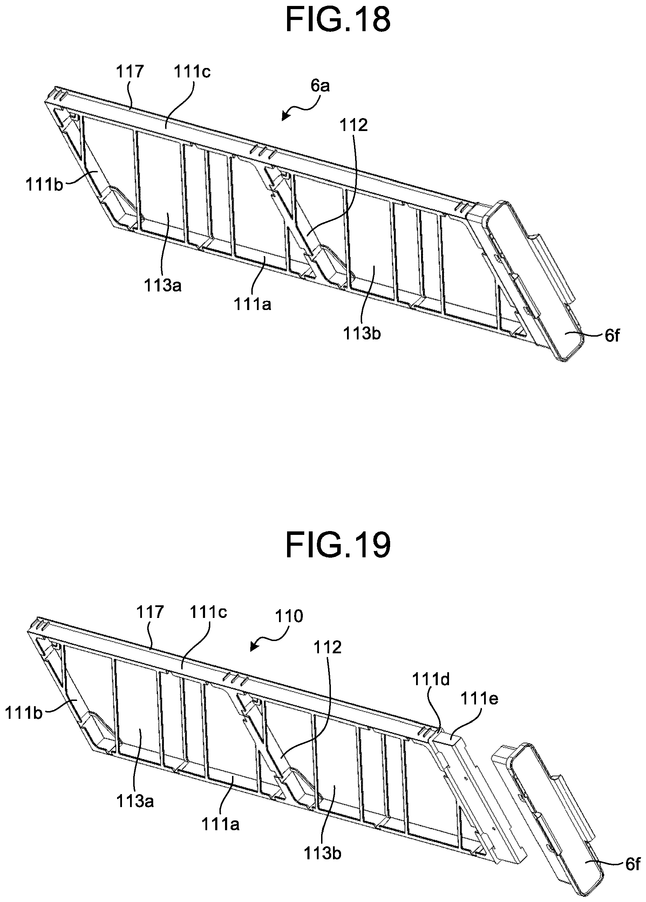

FIG. 16 is a perspective view of the supply air filter frame 5a in the first embodiment as viewed from the supply-airflow outflow side. FIG. 17 is a perspective view of the supply air filter frame 5a in the first embodiment with the supply-air filter grip 5f removed as viewed from the supply-airflow outflow side. FIG. 18 is a perspective view of the discharge air filter frame 6a in the first embodiment as viewed from the discharge-airflow outflow side. FIG. 19 is a perspective view of the discharge air filter frame 6a in the first embodiment with the discharge-air filter grip 6f removed as viewed from the discharge-airflow outflow side.

The supply air filter 5 is placed on the supply-airflow inflow side of the heat exchanger 2, i.e., upstream of the heat exchanger 2 in the supply air path. The discharge air filter 6 is placed on the discharge-airflow inflow side of the heat exchanger 2, i.e., upstream of the heat exchanger 2 in the discharge air path. The supply air filter frame 5a included in the supply air filter 5 and the discharge air filter frame 6a included in the discharge air filter 6 are each configured by accommodating a filter main body 120 in the hollow portion of a filter frame 110. That is, the supply air filter frame 5a and the discharge air filter frame 6a have an identical shape.

The filter frame 110 is a single member molded integrally by injection molding. The filter frame 110 is used as the supply air filter frame 5a and the discharge air filter frame 6a, and therefore the supply air filter frame 5a and the discharge air filter frame 6a can be manufactured through an identical working process by using a single die. In this manner, the heat-exchange type ventilation apparatus 100 achieves a reduction in die and machining costs for manufacturing the supply air filter frame 5a and the discharge air filter frame 6a.

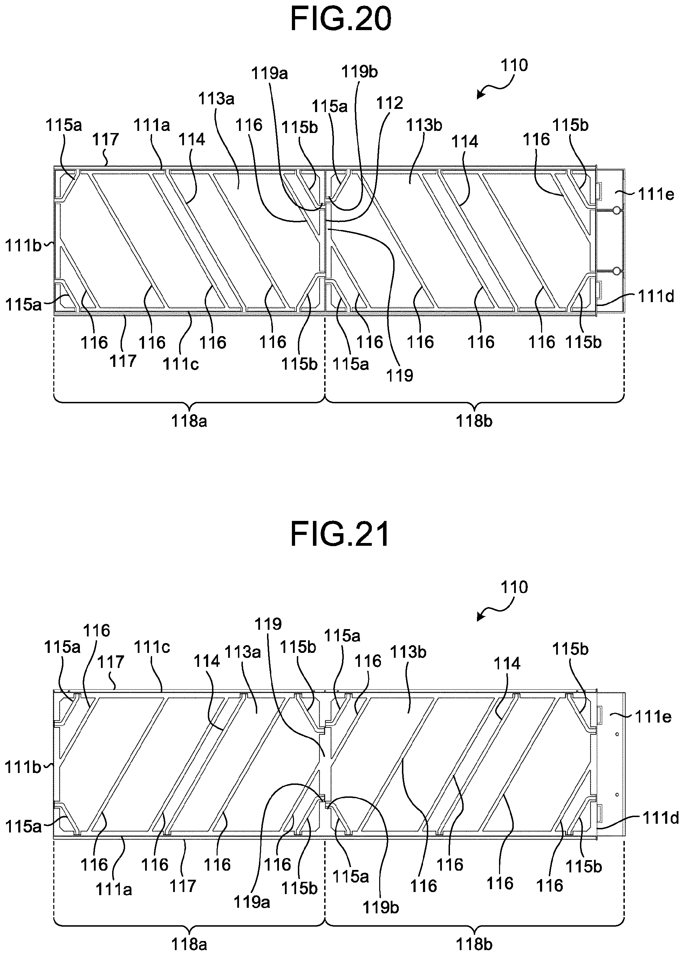

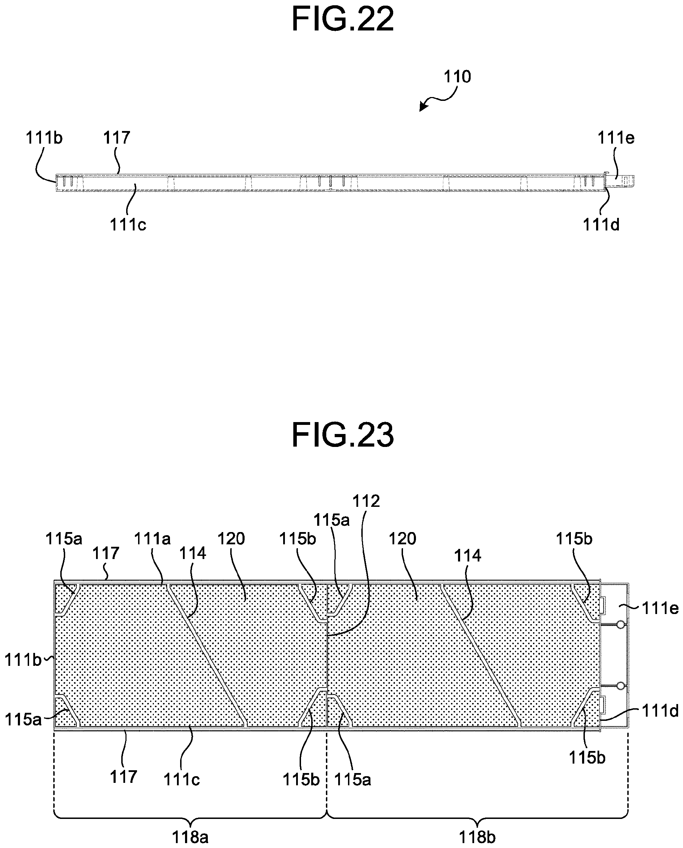

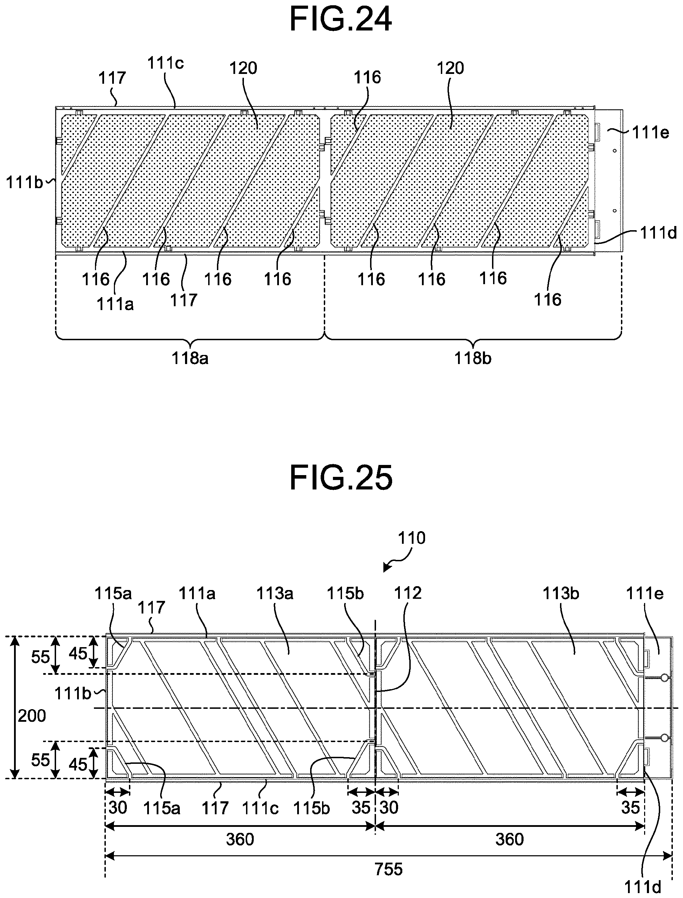

FIG. 20 is a plan view of the filter frame 110 in the first embodiment as viewed from the top surface side. FIG. 21 is a plan view of the filter frame 110 in the first embodiment as viewed from the bottom surface side. FIG. 22 is a side view of the filter frame 110 in the first embodiment as viewed from the side of the side surface that extends in the longitudinal direction. FIG. 23 is a plan view of the filter frame 110 in the first embodiment with the filter main bodies 120 accommodated therein as viewed from the top surface side. FIG. 24 is a plan view of the filter frame 110 in the first embodiment with the filter main bodies 120 accommodated therein as viewed from the bottom surface side. Although FIG. 23 is a plan view, the filter main bodies 120 are illustrated with hatching for the sake of easy understanding.

The supply-airflow inflow side of the supply air filter frame 5a and the discharge-airflow inflow side of the discharge air filter frame 6a are referred to as the top surface side in the description hereinafter. Also, the end surface of the side-surface portions of the filter frame 110 on the top surface side is referred to as the top surface. The supply-airflow outflow side of the supply air filter frame 5a and the discharge-airflow outflow side of the discharge air filter frame 6a are referred to as the bottom surface side in the description hereinafter. Also, the end surface of the side-surface portions of the filter frame 110 on the bottom surface side is referred to as the bottom surface.

The filter frame 110 has a rectangular shape in front view and has a hollow rectangular cylindrical shape with the bottom surface side and the top surface side both opened. The hollow portion of the filter frame 110 is defined by four side-surface portions that are a first side-surface portion 111a, a second side-surface portion 111b, a third side-surface portion 111c, and a fourth side-surface portion 111d. The first side-surface portion 111a and the third side-surface portion 111c are longer side-surface portions that are placed in parallel and face each other. The second side-surface portion 111b and the fourth side-surface portion 111d are shorter side-surface portions that are placed in parallel and face each other. The direction of elongation of the first side-surface portion 111a and the third side-surface portion 111c is the same as the longitudinal direction of the filter frame 110 and corresponds to the stacking direction.

The bottom surface and the top surface of the filter frame 110 are perpendicular to the side surfaces of the filter fame 110. The bottom surface described herein is the end surface of the side-surface portion on the bottom surface side. A grip attachment portion 111e is formed on a side of the fourth side-surface portion 111d that is opposite the side facing the second side-surface portion 111b. The supply-air filter grip 5f or the discharge-air filter grip 6f is attached to the grip attachment portion 111e. By attaching a grip to the filter frame 110, the work efficiency during attachment and detachment of the supply air filter 5 and the discharge air filter 6 is improved. The grip attachment portion 111e has a structure common to the supply-air filter grip 5f and the discharge-air filter grip 6f, and this enables grips with different outer shapes to be attached to the grip attachment portion 111e. That is, the filter frame 110 includes the grip attachment portion 111e to enable a grip to be attached thereto and detached therefrom, thereby allowing a higher degree of flexibility in the grip structure.

The filter frame 110 includes one partition plate 112, which is placed in the filter frame 110 and is parallel to the lateral direction of the rectangular shape of the filter frame 110 so as to partition the hollow portion. By including the partition plate 112, the hollow portion of the filter frame 110 is partitioned into two divided hollow portions that are a divided hollow portion 113a and a divided hollow portion 113b. The divided hollow portion 113a and the divided hollow portion 113b are sometimes referred to collectively as the divided hollow portion 113 in the description hereinafter.

Further, two divided regions that are a first divided region 118a and a second divided region 118b are defined by including the partition plate 112. The first divided region 118a and the second divided region 118b are sometimes referred to collectively as the divided region 118 in the description hereinafter. The first divided region 118a is a region on the side of the second side-surface portion 111b in the longitudinal direction of the filter frame 110 and is a region including the first side-surface portion 111a, the second side-surface portion 111b, the third side-surface portion 111c, and the partition plate 112. The second divided region 118b is a region on the side of the fourth side-surface portion 111d in the longitudinal direction of the filter frame 110 and is a region including the first side-surface portion 111a, the partition plate 112, the third side-surface portion 111c, and the fourth side-surface portion 111d.

The number of the partition plates 112 is not limited to one. The filter frame 110 may include a plurality of partition plates 112. Providing a plurality of partition plates 112 enables the filter main body 120 accommodated in the hollow portion to be downsized. This facilitates insertion and removal of the filter main body 120 into and from the filter frame 110. Further, the filter main body 120 can be downsized relative to the size of the filter frame 110. This facilitates handling of the filter main body 120 and improves the maintainability of the filter main body 120.

Further, in examples which are not embodiments of the invention, the filter frame 110 may not include the partition plate 112 depending on the size and shape of the filter frame 110. In a case where the filter frame 110 does not include the partition plate 112, one filter main body 120 is accommodated in one undivided hollow portion.

The filter frame 110 accommodates the filter main body 120 made from nonwoven fabric and having a flat plate shape in the divided hollow portion 113. The filter main body 120 is formed in a rectangular shape with a size that enables the filter main body 120 to be accommodated in the hollow portion of the filter frame 110. The type of the filter main body 120 can be changed depending on the use and purpose. Different types of the filter bodies 120 may be stacked and accommodated in the filter frame 110. For example, a dust collecting filter designed to collect dust and a deodorizing filter designed to eliminate odor may be stacked and used as the filter main body 120. Further, the filter main body 120 may be a pleated filter.

Each of the divided hollow portion 113a and the divided hollow portion 113b of the filter frame 110 includes one first rib 114, four second ribs 115, and a plurality of third ribs 116. That is, the filter frame 110 includes one first rib 114, four second ribs 115, and a plurality of third ribs 116 per divided hollow portion.

The first rib 114 connects the top surfaces of two facing longer side-surface portions of the filter frame 110, i.e., the end surfaces of the filter frame 110 on the supply-airflow inflow side or the discharge-airflow inflow side. That is, the first rib 114 connects the facing longer edge portions of the filter frame 110 on the supply-airflow inflow side or the discharge-airflow inflow side. That is, the first rib 114 connects the top surface of the first side-surface portion 111a with the top surface of the third side-surface portion 111c. In the first embodiment, in each divided region, one first rib 114 is placed in the central region in the direction of elongation of the first side-surface portion 111a. A plurality of first ribs 114 may be provided per divided hollow portion.

While the heat-exchange type ventilation apparatus 100 is operating or stopped, the filter main bodies 120 accommodated in the filter frame 110 are not pressed by a supply airflow or a discharge airflow toward the top surface side, i.e., toward the supply-airflow inflow side or the discharge-airflow inflow side. In each divided hollow portion in which the filter main body 120 is accommodated, the filter main body 120 is held by the four second ribs 115. Thus, it is satisfactory if at least one first rib 114 is provided such that the filter main body 120 does not come off the filter frame 110. The filter main body 120 is inserted into and is removed from the divided hollow portion from the top surface side of the filter frame 110. Accordingly, in a case where a large number of first ribs 114 are provided, the filter main body 120 cannot be easily inserted into and removed from the divided hollow portion 113. Consequently, it is preferable to provide as few first ribs 114 as possible within the range where the filter main body 120 does not come off the filter frame 110.

The first rib 114 holds the filter main body 120 on the top surface side of the filter frame 110 and prevents the filter main body 120 accommodated in the divided hollow portion 113 from coming off the filter frame 110 toward the top surface side. That is, the first rib 114 restricts the movement of the filter main body 120 accommodated in the filter frame 110 in the thickness direction of the filter frame 110 on the top surface side.

The first rib 114 extends obliquely to the direction of elongation of two facing longer side-surface portions to which this first rib 114 is connected. Thus, the direction of elongation of the first rib 114 obliquely crosses the longitudinal direction of the filter frame 110. This structure can prevent the filter main body 120 from being caught by the first rib 114 when the filter main body 120 is inserted into and removed from the divided hollow portion 113. In other words, this structure can facilitate insertion and removal of the filter main body 120 into and from the divided hollow portion 113.

The angle formed between the direction of elongation of the first rib 114 and the direction of elongation of the two longer side-surface portions to which the first rib 114 is connected is not particularly limited as long as the first rib 114 can hold the filter main body 120 and prevent the filter main body 120 from coming off the filter frame 110. It is satisfactory if this angle is appropriately set in accordance with the conditions such as the dimensions of the filter frame 110 and the filter main body 120. The width of the first rib 114 is not particularly limited. It is satisfactory if the width of the first rib 114 is appropriately set in consideration of the ability of the first rib 114 to hold the filter main body 120 within the range that minimizes the loss of the amount of supply airflow and discharge airflow.

Each of the second ribs 115 connects the top surfaces of two adjacent wall portions of the filter frame 110 that define a corner portion of the divided hollow portion 113, i.e., the end surfaces of the filter frame 110 on the supply-airflow inflow side or the discharge-airflow inflow side that define a corner portion of the divided hollow portion 113. The wall portions include the side-surface portions and the partition plate 112. In cases which are not embodiments, where the filter frame 110 does not include the partition plate 112, the side-surface portions correspond to the wall portions. That is, each of the second ribs 115 connects two adjacent edge portions of the filter frame 110 that define a corresponding one of the four corner portions on the supply-airflow inflow side or the discharge-airflow inflow side of the filter frame 110.

The second ribs 115 hold the filter main body 120 on the top surface side of the filter frame 110 and prevent the filter main body 120 accommodated in the divided hollow portion 113 from coming off the filter frame 110 toward the top surface side. That is, the second ribs 115 restrict the movement of the filter main body 120, accommodated in the filter frame 110, in the thickness direction of the filter frame 110 on the top surface side. By holding the filter main body 120 by the second ribs 115 near the four corners on the top surface side of the divided hollow portion 113, it is possible to effectively prevent the filter main body 120 from coming off the filter frame 110. The second ribs 115 hold the filter main body 120 near the four corners on the top surface side of the divided hollow portion 113, and therefore the filter main body 120 is less likely to be separated from the filter frame 110. This can reduce entry of dust and insects from the section where the filter main body 120 is separated from the filter frame 110.

If the second ribs 115 are formed on the supply-airflow inflow side or the discharge-airflow inflow side of the filter frame 110 in such a manner that each of the second ribs 115 connects two adjacent edge portions that define a corresponding one of at least two corner portions that are adjacent to each other in the direction of elongation of the shorter side-surface portion of the filter frame 110, the filter main body 120 can be effectively prevented from coming off the filter frame 110 by adjusting the position of the first rib 114. However, it is more preferable that the second ribs 115 are placed near the four corners on the top surface side of the divided hollow portion 113, because the second ribs 115 can more reliably prevent the filter main body 120 from coming off the filter frame 110.

As illustrated in FIGS. 2, 3, and 11, it is also possible to place the second ribs 115 near two diagonal corners on the top surface side of the divided hollow portion 113. However, it is preferable to place the second ribs 115 near two corner portions that are adjacent to each other in the direction of elongation of the shorter side-surface portion or near the four corners on the top surface side of the divided hollow portion 113, because the second ribs 115 can reliably prevent the filter main body 120 from coming off the filter frame 110.

The second ribs 115 each extend obliquely to the longitudinal direction of each of the two adjacent edge portions to which a corresponding one of the second ribs 115 is connected. That is, the second ribs 115 each extend in a direction that crosses the longitudinal direction and the lateral direction of the filter frame 110.

The angle formed between the direction of elongation of each of the second ribs 115 and the longitudinal direction of each of the two edge portions to which a corresponding one of the second ribs 115 is connected is not particularly limited as long as the second ribs 115 can hold the filter main body 120 and prevent the filter main body 120 from coming off the filter frame 110. It is satisfactory if this angle is appropriately set in accordance with the conditions such as the dimensions of the filter frame 110 and the filter main body 120. The width of the second ribs 115 is not particularly limited. It is satisfactory if the width of the second ribs 115 is appropriately set in consideration of the ability of the second ribs 115 to hold the filter main body 120 within the range that minimizes the loss of the amount of supply airflow and discharge airflow.

In each of the divided regions that are the first divided region 118a and the second divided region 118b, the second ribs 115 include second ribs 115a and second ribs 115b that are adjacent to each other in the longitudinal direction of the filter frame 110. The second ribs 115a are placed in each divided region 118 on the side of the second side-surface portion 111b that is one side of the filter frame 110 in the longitudinal direction. The second ribs 115b are placed in each divided region 118 on the side of the fourth side-surface portion 111d that is the other side of the filter frame 110 in the longitudinal direction. The second rib 115a and the second rib 115b extend in directions that cross the longitudinal direction of the filter frame 110 and that are opposite to each other with respect to the longitudinal direction and the lateral direction of the filter frame 10. The angle formed between the longitudinal direction of the filter frame 110 and the direction of elongation of the second rib 115a is the same as the angle formed between the longitudinal direction of the filter frame 110 and the direction of elongation of the second rib 115b.

The second ribs 115a are shorter than the second ribs 115b. That is, the area surrounded by the second rib 115a and two edge portions to which this second rib 115a is connected is smaller than the area surrounded by the second rib 115b and two edge portions to which this second rib 115b is connected.

When the filter main body 120 is inserted into the filter frame 110, one end side of the filter main body 120 having passed over the third ribs 116 is fitted under the second ribs 115b. Thereafter, the other end side of the filter main body 120 is fitted under the second ribs 115a. When the filter main body 120 is removed from the filter frame 110, the filter main body 120 is first removed from below the second ribs 115a. Thereafter, the filter main body 120 is withdrawn toward the side of the second ribs 115a and is thereby removed from the second ribs 115b and the third ribs 116. With this structure, even when the filter main body 120 that is less flexible and hard to fold is used, it is not necessary that the filter main body 120 be highly deformed, and thus it becomes easy to insert and remove the filter main body 120 into and from the filter frame 110.

The filter frame 110 is formed by injection molding. In consideration of the strength, a flange 119 is formed around the bottom surface side of the partition plate 112. However, in this flange, notches for removing fittings during production are formed in the regions corresponding to the second ribs 115. That is, as illustrated in FIGS. 20 and 21, a notched portion 119a is formed in a region of the flange 119 that corresponds to the second rib 115b that connects the partition plate 112 and the first side-surface portion 111a in the first divided region 118a. A notched portion 119b is formed in a region of the flange 119 that corresponds to the second rib 115a that connects the partition plate 112 and the first side-surface portion 111a in the second divided region 118b.

If the position of the notched portion 119a is the same as the position of the notched portion 119b in the direction of elongation of the partition plate 112, the flange 119 has a reduced strength around the notched portion 119a and the notched portion 119b. Thus, it is preferable to locate the notched portion 119a and the notched portion 119b at different positions in the direction of elongation of the partition plate 112 in order to minimize a reduction in strength of the flange 119 around the notched portion 119a and the notched portion 119b.

Accordingly, the second rib 115b that connects the partition plate 112 and the first side-surface portion 111a in the first divided region 118a and the second rib 115a that connects the partition plate 112 and the first side-surface portion 111a in the second divided region 118b are connected to the partition plate 112 at different positions in the direction of elongation of the partition plate 112.

For the same reasons as above, the second rib 115b that connects the partition plate 112 and the third side-surface portion 111c in the first divided region 118a and the second rib 115a that connects the partition plate 112 and the third side-surface portion 111c in the second divided region 118b are connected to the partition plate 112 at different positions in the direction of elongation of the partition plate 112.

The third ribs 116 extend toward the region of the divided hollow portion 113 from the bottom surface of at least one of the wall portions in the filter frame 110, which define the divided hollow portion 113, i.e., from the end surface of the filter frame 110 on the supply-airflow outflow side or the discharge-airflow outflow side. That is, the third ribs 116 extend toward the region of the divided hollow portion 113 from at least one of the edge portions on the supply-airflow outflow side or the discharge-airflow outflow side.

For example, each of the third ribs 116 as described above connects the bottom surfaces of two of the wall portions of the filter frame 110, which define the divided hollow portion 113, i.e., the end surfaces of the filter frame 110 on the supply-airflow outflow side or the discharge-airflow outflow side. The wall portions include the side-surface portions and the partition plate 112. In a case where the filter frame 110 does not include the partition plate 112, the side-surface portions correspond to the wall portions. That is, the third rib 116 connects two edge portions of the filter frame 110 on the supply-airflow outflow side or the discharge-airflow outflow side. In each divided region 118, a plurality of third ribs 116 are placed in parallel and spaced apart from each other in the longitudinal direction of the filter frame 110.

The third ribs 116 hold the filter main body 120 on the bottom surface side of the filter frame 110 and prevent the filter main body 120 accommodated in the divided hollow portion 113 from coming off the filter frame 110 toward the bottom surface side. That is, the third ribs 116 restrict the movement of the filter main body 120, accommodated in the filter frame 110, in the thickness direction of the filter frame 110 on the bottom surface side.

The third ribs 116 each extend obliquely to the direction of elongation of each of the two edge portions to which a corresponding one of the third ribs 116 is connected. Thus, the direction of elongation of the third ribs 116 obliquely crosses the longitudinal direction of the filter frame 110. This structure can prevent the filter main body 120 from being caught by the third ribs 116 when the filter main body 120 is inserted into and removed from the divided hollow portion 113. In other words, this structure can facilitate insertion and removal of the filter main body 120 into and from the divided hollow portion 113. In the first embodiment, the first rib 114 and the third ribs 116 extend in the same direction as each other. The first rib 114 and the third ribs 116 may not necessarily extend in the same direction as each other. Further, a plurality of third ribs 116 may extend in different directions from each other.

During operation of the heat-exchange type ventilation apparatus 100, the filter main body 120 accommodated in the filter frame 110 is forcefully pressed against the bottom surface side by a supply airflow or a discharge airflow. Thus, a plurality of third ribs 116 are placed in order to firmly hold the filter main body 120 in the filter frame 110. The number of the third ribs 116 is greater than the number of the first ribs 114. Accordingly, it is preferable to use the filter frame 110 with its top surface located on the supply-airflow inflow side or the discharge-airflow inflow side and with its bottom surface located on the supply-airflow outflow side or the discharge-airflow outflow side.

The angle formed between the direction of elongation of each of the third ribs 116 and the direction of elongation of each of the two edge portions to which a corresponding one of the third ribs 116 is connected is not particularly limited as long as the third ribs 116 can hold the filter main body 120 and prevent the filter main body 120 from coming off the filter frame 110. It is satisfactory if this angle is appropriately set in accordance with the conditions such as the dimensions of the filter frame 110 and the filter main body 120. The width of the third ribs 116 is not particularly limited. It is satisfactory if the width of the third ribs 116 is appropriately set in consideration of the ability of the third ribs 116 to hold the filter main body 120 within the range that minimizes the loss of the amount of supply airflow and discharge airflow.

Part of each of the first rib 114, the second rib 115, and the third rib 116 near the section thereof connected to an edge portion may extend perpendicular to the edge portion.

FIG. 25 is a diagram illustrating an example of the dimensions of the filter frame 110 in the first embodiment. The filter frame 110 has a dimension of 755 mm in the longitudinal direction and a dimension of 200 mm in the lateral direction. The filter frame 110 has a height of 25 mm.

In the longitudinal direction of the filter frame 110, the length from the outer side surface of the second side-surface portion 111b to the central position of the partition plate 112 is 360 mm. In the longitudinal direction of the filter frame 110, the length from the outer side surface of the fourth side-surface portion 111d to the central position of the partition plate 112 is 360 mm. In the longitudinal direction of the filter frame 110, the length from the section of the second rib 115a connected to the first side-surface portion 111a or the section of the second rib 115a connected to the third side-surface portion 111c to the outer side surface of the second side-surface portion 111b is 30 mm, and the length from the section of the second rib 115a connected to the first side-surface portion 111a or the section of the second rib 115a connected to the third side-surface portion 111c to the central position of the partition plate 112 is 30 mm. In the longitudinal direction of the filter frame 110, the length from the section of the second rib 115b connected to the first side-surface portion 111a or the section of the second rib 115b connected to the third side-surface portion 111c to the outer side surface of the fourth side-surface portion 111d is 35 mm, and the length from the section of the second rib 115b connected to the first side-surface portion 111a or the section of the second rib 115b connected to the third side-surface portion 111c to the central position of the partition plate 112 is 35 mm.

In the lateral direction of the filter frame 110, the length from the section of the second rib 115a connected to the second side-surface portion 111b or the section of the second rib 115a connected to the partition plate 112 to the outer side surface of the first side-surface portion 111a is 45 mm, and the length from the section of the second rib 115a connected to the second side-surface portion 111b or the section of the second rib 115a connected to the partition plate 112 to the outer side surface of the third side-surface portion 111c is 45 mm. In the lateral direction of the filter frame 110, the length from the section of the second rib 115b connected to the fourth side-surface portion 111d or the section of the second rib 115b connected to the partition plate 112 to the outer side surface of the first side-surface portion 111a is 55 mm, and the length from the section of the second rib 115b connected to the fourth side-surface portion 111d or the section of the second rib 115b connected to the partition plate 112 to the outer side surface of the third side-surface portion 111c is 55 mm.

The divided hollow portion 113a and the divided hollow portion 113b have a dimension of 356 mm in the longitudinal direction, a dimension of 185 mm in the lateral direction, and a dimension of 17 mm in the height direction. The filter main body 120 accommodated in each of the divided hollow portion 113a and the divided hollow portion 113b has a dimension of 355 mm in the longitudinal direction, a dimension of 184 mm in the lateral direction, and a dimension of 15 mm in thickness.

As illustrated in FIGS. 16 to 25, the filter frame 110 includes a frame protrusion 117, which is a protrusion that protrudes outward and extends in the longitudinal direction of the filter frame 110, on the top surface side of the outer side surface of each of the first side-surface portion 111a and the third side-surface portion 111c. The frame protrusion 117 corresponds to the frame protrusion 5c and the frame projection 6c that have been described previously. In the same manner as the frame protrusion 5c and the frame protrusion 6c, the frame protrusion 117 is formed so as to be inclined toward the top surface side as it extends outward from the outer side surface of the first side-surface portion 111a or the third side-surface portion 111c.

The filter frame 110 includes the frame protrusions 117 as described above; therefore, when the supply air filter 5 and the discharge air filter 6 are attached and detached by sliding these air filters 5 and 6, insertion and removal of the supply air filter 5 and the discharge air filter 6 in the stacking direction are guided to an appropriate position. With this structure, the effects of maintaining airtightness and improving ease of manufacturing can be obtained.

As illustrated in FIGS. 16 to 19, a detachable grip is provided at the end portion of the filter frame 110 on one side in the longitudinal direction. That is, in the filter frame 110, the supply-air filter grip 5f or the discharge-air filter grip 6f is provided, which is attachable to and detachable from the grip mounting portion 111e placed on the outer side of the fourth side-surface portion 111d.

In a case where plural types of filter frames with different shapes are used in order to hold a filter main body, when a filter is initially attached to a heat-exchange type ventilation apparatus, it is necessary to perform a work to assemble two types of filter frames with different shapes. Further, when maintenance of the filter, such as replacement of the filter, is performed, it is necessary to perform a work to disassemble plural types of filter frames and a work to assemble plural types of filter frames. This makes maintenance work burdensome.

Meanwhile, by using the aforementioned filter frame 110 as the supply air filter frame 5a and the discharge air filter frame 6a, the filter main body 120 can be held by only a single filter frame. Thus, when the supply air filter 5 and the discharge air filter 6 are initially attached to the heat-exchange type ventilation apparatus 100 and when maintenance of the supply air filter 5 and the discharge air filter 6, such as replacement of the filter main body 120, is performed, it is not necessary to perform a work to dissemble or assemble plural types of filter frames. In this manner, the heat-exchange type ventilation apparatus 100 can improve the maintainability of the supply air filter 5 and the discharge air filter 6.

An integrated filter frame can be configured by connecting two members with a connecting member such as a hinge. However, if the size of a filter frame is increased, it is difficult to manufacture a large-sized hinge. Thus, it is difficult to realize a large-sized integrated filter frame.

Meanwhile, because it is possible to integrally mold the filter frame 110 easily, a large-sized filter frame can be realized.

In a case where plural types of filter frames with different shapes are used to hold a filter main body, these plural types of filter frames are manufactured by using dedicated dies with different shapes through separate manufacturing processes. Thus, costs of dedicated dies and costs for performing a plurality of processes are incurred in manufacturing the filter frames for holding the filter main body.

Meanwhile, by using the filter frame 110, which is an integrally-molded single member, as the supply air filter frame 5a and the discharge air filter frame 6a, the filter main body 120 can be held only by a single filter frame. With this structure, in the heat-exchange type ventilation apparatus 100, the number of parts of the supply air filter frame 5a and the discharge air filter frame 6a is reduced. The supply air filter frame 5a and the discharge air filter frame 6a are manufactured through the identical process by using a single die. In this manner, the heat-exchange type ventilation apparatus 100 achieves a reduction in manufacturing costs by reducing die and machining costs for manufacturing the supply air filter frame 5a and the discharge air filter frame 6a.

In the heat-exchange type ventilation apparatus 100 described above, the inner protrusions 53 and 54, which are formed on the frame members 22, are in line contact with the heat exchange element 21; thus, this is less likely to form a gap than a case in which the frame members 22 are in surface contact with the heat exchange element 21, and thereby airtightness can be improved. Additionally, as illustrated in FIG. 7, by interposing a seal material 57 in a gap between each of the frame members 22 and the heat exchange element 21, airtightness can be further improved.

Furthermore, the inner protrusions 53 and 54 can be used as marks indicative of an application area over which the seal material 57 is applied. Additionally, the inner protrusions 53 and 54 can be used as walls to prevent the seal material 57 from leaking from the gap between each of the frame members 22 and the heat exchange element 21. In particular, the inner protrusions 54, which are placed on the end portion sides of the inner protrusions 53 on each of the frame members 22, tend to function as walls to prevent the seal material 57 from leaking. By forming the inner protrusions 54 as end-portion-side protrusions on the end portions of each of the frame members 22, the inner protrusions 54 can function as walls to prevent the leaking more reliably. The number of inner protrusions formed on the surface of each frame member 22 that faces one of the surfaces of the heat exchange element 21 may be one, or may be three or more.

Additionally, the fitting structure in which the outer protrusions 52 of the frame members 22 are fitted in the support recess portions 25a to 25d can achieve an improvement in airtightness between the heat exchanger 2 and the housing 1. Furthermore, even when the heat exchanger 2 has contracted due to deterioration over time, the airtightness between the heat exchanger 2 and the housing 1 is maintained as long as the outer protrusions 52 are fitted in the support recess portions 25a to 25d. That is, even when the heat exchanger 2 has contracted, the airtightness is maintained with ease. Moreover, even when the dimensions of the heat exchanger 2 vary due to manufacturing errors, the airtightness between the heat exchanger 2 and the housing 1 is maintained as long as the degree of variation is such that the outer protrusions 52 are allowed to be fitted in the support recess portions 25a to 25d. Moreover, by interposing the seal material 56 between the outer protrusions 52 and the support recess portions 25a to 25d, the airtightness is maintained further reliably when the heat exchanger 2 has contracted. Furthermore, when the outer protrusions 52 are fitted in the support recess portions 25a to 25d in greater depths, the airtightness can be maintained even when the heat exchanger 2 has a greater contraction.

Furthermore, as long as the outer protrusions 52 are fitted in the support recess portions 25a to 25d, shifting in position of the heat exchanger 2 and falling of the heat exchanger 2 in the housing 1 can be prevented even when the heat exchanger 2 has contracted. Additionally, the frame members 22 reinforce the heat exchanger 2; thus, the product life can be extended.

Additionally, the frame protrusion 5c, which is formed on the supply air filter frame 5a, and the frame protrusion 6c, which is formed on the discharge air filter frame 6a, are fitted in the filter-frame guide recess portions 13a and 13b; thus, such a fitting structure can achieve an improvement in airtightness between the supply air filter frame 5a and the discharge air filter frame 6a, and the housing 1. In this way, air can be prevented from passing through the supply air path and the discharge air path without going through the supply air filter 5 and the discharge air filter 6.

By using the filter frame 110, which is an integrally-molded single member, as the supply air filter frame 5a and the discharge air filter frame 6a, the heat-exchange type ventilation apparatus 100 can reduce the number of parts of the supply air filter 5 and the discharge air filter 6. Moreover, by using the filter frame 110, which is an integrally-molded single member, as the supply air filter frame 5a and the discharge air filter frame 6a, when maintenance of the supply air filter 5 and the discharge air filter 6, such as replacement of the filter main body 120, is performed, it is not necessary to perform a work to dissemble or assemble plural types of filter frames. In this manner, the heat-exchange type ventilation apparatus 100 can improve the maintainability of the supply air filter 5 and the discharge air filter 6.

By using a single type of filter frame 110 as the supply air filter frame 5a and the discharge air filter frame 6a, the heat-exchange type ventilation apparatus 100 can achieve a reduction in die and machining costs for manufacturing the supply air filter frame 5a and the discharge air filter frame 6a.

### Reference Signs List

1 housing, 2 heat exchanger, 3 air supplying fan, 3a inlet-side casing, 3b motor casing, 3c, 4c inlet port, 3d, 4d outlet port, 4 air discharging fan, 4a inlet-side casing, 4b motor casing, 5 supply air filter, 5a supply air filter frame, 5b, 6b facing surface, 5c, 6c frame protrusion, 5d supply-air-filter sealing surface portion, 5e, 6e protrusion, 5f supply-air filter grip, 5g, 6g facing surface, 6 discharge air filter, 6a discharge air filter frame, 6d discharge-air-filter sealing surface portion, 6f discharge-air filter grip, 7a exterior-side inlet portion, 7b interior-side outlet portion, 8a interior-side inlet portion, 8b exterior-side outlet portion, 9 top plate, 9a, 10a filter-frame guide recess portion, 10 bottom plate, 11 drain pan, 12 drain port, 13 rib frame body, 13a, 13b filter-frame guide recess portion, 14 control circuit, 15, 16, 17, 18 side plate, 16a, 16b opening, 18a, 18b opening, 19 supply-air-side drain pan, 20 discharge-air-side drain pan, 21 heat exchange element, 21a partition member, 21b spacing member, 22 frame member, 23 end face member, 25a, 25b, 25c, 25d support recess portion, 31, 41 casing, 32, 42 rotation axis, 33, 43 protrusion, 34, 44 inlet portion, 35, 45 inclined surface, 36, 46 motor, 52 outer protrusion, 53, 54 inner protrusion, 56, 57, 58 seal material, 100 heat-exchange type ventilation apparatus, 110 filter frame, 111a first side-surface portion, 111b second side-surface portion, 111c third side-surface portion, 111d fourth side-surface portion, 111e grip attachment portion, 112 partition plate, 113, 113a, 113b divided hollow portion, 114 first rib, 115, 115a, 115b second rib, 116 third rib, 117 frame protrusion, 118 divided region, 118a first divided region, 118b second divided region, 119 flange, 119a, 119b notched portion, 120 filter main body.

## Claims

1. A heat-exchange type ventilation apparatus (100) comprising:
a main body (1) in which a supply air path to supply outside air to indoors and a discharge air path to discharge inside air to outdoors are provided;
a heat exchanger (2) placed in the main body (1) to allow heat exchange between a supply airflow passing through the supply air path and a discharge airflow passing through the discharge air path, the heat exchanger (2) including a plurality of sheet-like and polygonal shaped partition members (21a) stacked with spacing therebetween;
an air supplying fan (3) placed in the main body (1) to generate the supply airflow;
an air discharging fan (4) placed in the main body (1) to generate the discharge airflow; and
a filter (5, 6) in which a filter main body (120) is accommodated in a hollow portion of a filter frame (110) that has a rectangular shape in front view, the filter (5, 6) being provided on a supply-airflow inflow side and a discharge-airflow inflow side of the heat exchanger (2), wherein
the filter frame (110) is configured by an integrally-molded single member,
the filter frame (110) includes
a first rib (114) connecting top surfaces of two longer edge portions (111a, 111c) which face one another on the supply-airflow inflow side or the discharge-airflow inflow side,
second ribs (115), each of which connects two adjacent edge portions that define a corresponding one of at least two corner portions that are adjacent to each other in a direction of elongation of a shorter edge portion (111b, 111d) on the supply-airflow inflow side or the discharge-airflow inflow side, and
a plurality of third ribs (116), each of which extends toward a region of the hollow portion from a bottom surface of at least one edge portion on a supply-airflow outflow side or a discharge-airflow outflow side of the heat exchanger (2),
the filter frame (110) includes a partition plate (112) that is placed in the filter frame (110) and is parallel to a lateral direction of the filter frame (110) so as to partition the hollow portion into a plurality of divided hollow portions (113a, 113b), and
each of the divided hollow portions (113a, 113b) includes the first rib (114), the second rib (115), and the third rib (116).

2. The heat-exchange type ventilation apparatus (100) according to claim 1, wherein the second rib (115a) placed on one side in a longitudinal direction of the filter frame (110) in the hollow portion or the divided hollow portion (113a, 113b) is shorter than the second rib (115b) placed on another side in the longitudinal direction of the filter frame (110).

3. The heat-exchange type ventilation apparatus (100) according to claim 1 or 2, wherein
a protrusion (5c, 6c, 117) is disposed on a side surface of the filter frame(110), the side surface extending in a stacking direction of the partition members (21a), and
a filter-frame guide recess portion (13a, 13b) is formed inside the main body (1), the filter-frame guide recess portion (13a, 13b) supporting the filter frame (110) with the protrusion (5c, 6c, 117) fitted in the filter-frame guide recess portion (13a, 13b).

4. The heat-exchange type ventilation apparatus (100) according to any one of claims 1 to 3, wherein
the main body (1) has, in one side surface,
an opening (16b) for a supply air filter (5) to allow the supply air filter (5) to be inserted and removed with a longitudinal direction of the supply air filter (5) coinciding with a stacking direction of the partition members (21a), the supply air filter (5) being the filter provided on the supply-airflow inflow side of the heat exchanger (2), and
an opening (16a) for a discharge air filter (6) to allow the discharge air filter (6) to be inserted and removed with a longitudinal direction of the discharge air filter (6) coinciding with the stacking direction of the partition members (21a), the discharge air filter (6) being the filter provided on the discharge-airflow inflow side of the heat exchanger (2), and
the opening (16b) for the supply air filter (5) is larger than the opening (16a) for the discharge air filter (6) .

5. The heat-exchange type ventilation apparatus (100) according to claim 4, wherein
the supply air filter (5) includes a detachable sealing portion (5f) at an end portion of the supply air filter (5) located on a side of one side surface of the main body (1) in the longitudinal direction, the sealing portion (5f) sealing the opening (16b) for the supply air filter (5) from an outer side of the main body (1), and
the discharge air filter (6) includes a detachable sealing portion (6f) at an end portion of the discharge air filter (6) located on a side of one side surface of the main body (1) in the longitudinal direction, the sealing portion (6f) sealing the opening (16a) for the discharge air filter (6) from an outer side of the main body (1).

## Patentansprüche

1. Wärmetausch-Belüftungsvorrichtung (100), umfassend:
einen Hauptkörper (1), in dem ein Zuluftpfad für die Zufuhr von Außenluft in einen Innenraum und ein Abluftpfad zum Abführen von Innenluft nach draußen bereitgestellt sind;
einen Wärmetauscher (2), der in dem Hauptkörper (1) angeordnet ist, um einen Wärmeaustausch zwischen einem Zuluftstrom, der durch den Zuluftpfad strömt, und einem Abluftstrom, der durch den Abluftpfad strömt, zu ermöglichen, wobei der Wärmetauscher (2) eine Vielzahl von plattenartigen und polygonal geformten Trennelementen (21a) umfasst, die mit Abstand dazwischen gestapelt sind;
einen Luftzufuhrventilator (3), der in dem Hauptkörper (1) angeordnet ist, um den Zuluftstrom zu erzeugen;
einen Luftabführventilator (4), der in dem Hauptkörper (1) angeordnet ist, um den Abluftstrom zu erzeugen; und
einen Filter (5, 6), in dem ein Filterhauptkörper (120) in einem hohlen Abschnitt eines Filterrahmens (110) untergebracht ist, der in Vorderansicht eine rechteckige Form aufweist, wobei der Filter (5, 6) auf einer Zuluftstrom-Einströmseite und einer Abluftstrom-Einströmseite des Wärmetauschers (2) angeordnet ist, wobei
der Filterrahmen (110) als ein einstückig geformtes Einzelelement ausgelegt ist,
der Filterrahmen (110) Folgendes umfasst:
eine erste Rippe (114), die die Oberseiten von zwei längeren Kantenabschnitten (111a, 111c) miteinander verbindet, die einander auf der Zuluftstrom-Einströmseite oder der Abluftstrom-Einströmseite gegenüberliegen,
zweite Rippen (115), die jeweils zwei aneinander angrenzende Kantenabschnitte verbinden, die einen entsprechenden der zumindest zwei Eckabschnitte, die in einer Längsrichtung eines kürzeren Kantenabschnitts (111b, 111d) auf der Zuluftstrom-Einströmseite oder der Abluftstrom-Einströmseite aneinander angrenzen, definieren, und
eine Vielzahl von dritten Rippen (116), die sich jeweils in Richtung eines Bereichs des hohlen Abschnitts von einer Unterseite von zumindest einem Kantenabschnitt auf einer Zuluftstrom-Ausströmseite oder einer Abluftstrom-Ausströmseite des Wärmetauschers (2) erstrecken,
der Filterrahmen (110) eine Trennplatte (112) umfasst, die in dem Filterrahmen (110) angeordnet ist und parallel zu einer Seitenrichtung des Filterrahmens (110) liegt, so dass der hohle Abschnitt in eine Vielzahl von unterteilten hohlen Abschnitten (113a, 113b) unterteilt wird, und
jeder der unterteilten hohlen Abschnitte (113a, 113b) die erste Rippe (114), die zweite Rippe (115) und die dritte Rippe (116) umfasst.

2. Wärmetausch-Belüftungsvorrichtung (100) nach Anspruch 1, wobei die zweite Rippe (115a), die auf einer Seite in einer Längsrichtung des Filterrahmens (110) in dem hohlen Abschnitt oder dem unterteilten hohlen Abschnitt (113a, 113b) angeordnet ist, kürzer als die zweite Rippe (115b) ist, die auf einer anderen Seite in der Längsrichtung des Filterrahmens (110) angeordnet ist.

3. Wärmetausch-Belüftungsvorrichtung (100) nach Anspruch 1 oder 2, wobei
ein Vorsprung (5c, 6c, 117) an einer Seitenfläche des Filterrahmens (110) angeordnet ist, wobei die Seitenfläche sich in einer Stapelrichtung der Trennelemente (21a) erstreckt, und
ein Filterrahmen-Führungsaussparungsabschnitt (13a, 13b) innerhalb des Hauptkörpers (1) ausgebildet ist, wobei der Filterrahmen-Führungsaussparungsabschnitt (13a, 13b) den Filterrahmen (110) mit dem Vorsprung (5c, 6c, 117), der in den Filterrahmen-Führungsaussparungsabschnitt (13a, 13b) eingepasst ist, stützt.

4. Wärmetausch-Belüftungsvorrichtung (100) nach einem der Ansprüche 1 bis 3, wobei
der Hauptkörper (1) in einer Seitenfläche Folgendes aufweist:
eine Öffnung (16b) für einen Zuluftfilter (5), um dem Zuluftfilter (5) zu ermöglichen, mit einer Längsrichtung des Zuluftfilters (5), die mit einer Stapelrichtung der Trennelemente (21a) übereinstimmt, eingefügt und entfernt zu werden, wobei der Zuluftfilter (5) der Filter ist, der auf der Zuluftstrom-Einströmseite des Wärmetauschers (2) bereitgestellt ist, und
eine Öffnung (16a) für einen Abluftfilter (6), um dem Abluftfilter (6) zu ermöglichen, mit einer Längsrichtung des Abluftfilters (6), die mit der Stapelrichtung der Trennelemente (21a) übereinstimmt, eingefügt und entfernt zu werden, wobei der Abluftfilter (6) der Filter ist, der auf der Abluftstrom-Einströmseite des Wärmetauschers (2) bereitgestellt ist, und
die Öffnung (16b) für den Zuluftfilter (5) größer als die Öffnung (16a) für den Abluftfilter (6) ist.

5. Wärmetausch-Belüftungsvorrichtung (100) nach Anspruch 4, wobei
der Zuluftfilter (5) einen lösbaren Abdichtungsabschnitt (5f) an einem Endabschnitt des Zuluftfilters (5) umfasst, der auf einer Seite einer Seitenfläche des Hauptkörpers (1) in der Längsrichtung angeordnet ist, wobei der Abdichtungsabschnitt (5f) die Öffnung (16b) für den Zuluftfilter (5) gegenüber einer Außenseite des Hauptkörpers (1) abdichtet, und
der Abluftfilter (6) einen lösbaren Abdichtungsabschnitt (6f) an einem Endabschnitt des Abluftfilters (6) umfasst, der auf einer Seite einer Seitenfläche des Hauptkörpers (1) in der Längsrichtung angeordnet ist, wobei der Abdichtungsabschnitt (6f) die Öffnung (16a) für den Abluftfilter (6) gegenüber einer Außenseite des Hauptkörpers (1) abdichtet.

## Revendications

1. Appareil de ventilation du type à échange de chaleur (100) comprenant :
un corps principal (1) dans lequel un trajet d'air d'alimentation pour alimenter de l'air extérieur à l'intérieur et un trajet d'air d'évacuation pour évacuer de l'air intérieur vers l'extérieur sont prévus ;
un échangeur de chaleur (2) placé dans le corps principal (1) pour permettre un échange de chaleur entre un flux d'air d'alimentation passant par le trajet d'air d'alimentation et un flux d'air d'évacuation passant par le trajet d'air d'évacuation, l'échangeur de chaleur (2) comprenant une pluralité d'éléments de séparation analogues à une feuille et de forme polygonale (21a) empilés avec un espacement entre eux ;
un ventilateur d'alimentation en air (3) placé dans le corps principal (1) pour générer le flux d'air d'alimentation ;
un ventilateur d'évacuation d'air (4) placé dans le corps principal (1) pour générer le flux d'air d'évacuation ; et
un filtre (5, 6) dans lequel un corps principal de filtre (120) est logé dans une partie creuse d'un cadre de filtre (110) qui a une forme rectangulaire en vue avant, le filtre (5, 6) étant prévu sur un côté d'écoulement d'entrée de flux d'air d'alimentation et un côté d'écoulement d'entrée de flux d'air d'évacuation de l'échangeur de chaleur (2), dans lequel
le cadre de filtre (110) est configuré par un élément unique moulé d'un seul tenant,
le cadre de filtre (110) comprend
une première nervure (114) connectant des surfaces supérieures de deux parties de bord plus longues (111a, 111c) qui se font face sur le côté d'écoulement d'entrée de flux d'air d'alimentation ou sur le côté d'écoulement d'entrée de flux d'air d'évacuation,
des deuxièmes nervures (115), dont chacune connecte deux parties de bord adjacentes qui définissent une correspondante d'au moins deux parties de coin qui sont adjacentes l'une à l'autre dans une direction d'allongement d'une partie de bord plus court (111b, 111d) sur le côté d'écoulement d'entrée de flux d'air d'alimentation ou sur le côté d'écoulement d'entrée de flux d'air d'évacuation, et
une pluralité de troisièmes nervures (116), dont chacune s'étend vers une région de la partie creuse à partir d'une surface inférieure d'au moins une partie de bord sur un côté d'écoulement de sortie de flux d'air d'alimentation ou sur un côté d'écoulement de sortie de flux d'air d'évacuation de l'échangeur de chaleur (2),
le cadre de filtre (110) comprend une plaque de séparation (112) qui est placée dans le cadre de filtre (110) et est parallèle à une direction latérale du cadre de filtre (110) de manière à séparer la partie creuse en une pluralité de parties creuses divisées (113a, 113b), et
chacune des parties creuses divisées (113a, 113b) comprend la première nervure (114), la deuxième nervure (115) et la troisième nervure (116).

2. Appareil de ventilation du type à échange de chaleur (100) selon la revendication 1, dans lequel la deuxième nervure (115a) placée sur un premier côté dans une direction longitudinale du cadre de filtre (110) dans la partie creuse ou la partie creuse divisée (113a), 113b) est plus courte que la deuxième nervure (115b) placée sur un autre côté dans la direction longitudinale du cadre de filtre (110).

3. Appareil de ventilation du type à échange de chaleur (100) selon la revendication 1 ou 2, dans lequel
une saillie (5c, 6c, 117) est disposée sur une surface latérale du cadre de filtre (110), la surface latérale s'étendant dans une direction d'empilement des éléments de séparation (21a), et
une partie d'évidement de guidage de cadre de filtre (13a, 13b) est formée à l'intérieur du corps principal (1), la partie d'évidement de guidage de cadre de filtre (13a, 13b) supportant le cadre de filtre (110) avec la saillie (5c, 6c, 117) montée dans la partie d'évidement de guidage du cadre de filtre (13a, 13b).

4. Appareil de ventilation du type à échange de chaleur (100) selon l'une quelconque des revendications 1 à 3, dans lequel
le corps principal (1) présente, dans une surface latérale,
une ouverture (16b) pour un filtre à air d'alimentation (5) pour permettre au filtre à air d'alimentation (5) d'être inséré et retiré avec une direction longitudinale du filtre à air d'alimentation (5) coïncidant avec une direction d'empilement des éléments de séparation (21a)), le filtre à air d'alimentation (5) étant le filtre prévu sur le côté d'écoulement d'entrée de flux d'air d'alimentation de l'échangeur de chaleur (2), et
une ouverture (16a) pour un filtre à air d'évacuation (6) pour permettre au filtre à air d'évacuation (6) d'être inséré et retiré avec une direction longitudinale du filtre à air d'évacuation (6) coïncidant avec la direction d'empilement des éléments de séparation (21a)), le filtre à air d'évacuation (6) étant le filtre prévu sur le côté d'écoulement d'entrée de flux d'air d'évacuation de l'échangeur de chaleur (2), et
l'ouverture (16b) du filtre à air d'alimentation (5) est plus grande que l'ouverture (16a) du filtre à air d'évacuation (6).

5. Appareil de ventilation (100) du type à échange de chaleur selon la revendication 4, dans lequel
le filtre à air d'alimentation (5) comprend une partie d'étanchéité amovible (5f) au niveau d'une partie d'extrémité du filtre à air d'alimentation (5) située sur un côté d'une surface latérale du corps principal (1) dans la direction longitudinale, la partie d'étanchéité (5f) scellant l'ouverture (16b) pour le filtre à air d'alimentation (5) depuis un côté extérieur du corps principal (1), et
le filtre à air d'évacuation (6) comprend une partie d'étanchéité amovible (6f) au niveau d'une partie d'extrémité du filtre à air d'évacuation (6) située sur un côté d'une surface latérale du corps principal (1) dans la direction longitudinale, la partie d'étanchéité (6f) scellant l'ouverture (16a) pour le filtre à air d'évacuation (6) à partir d'un côté extérieur du corps principal (1).
